# EUROPÄISCHE PATENTSCHRIFT

(11) **EP 3 978 328 B1**
(45) Veröffentlichungstag und Bekanntmachung des Hinweises auf die Patenterteilung: **30.04.2025**
(21) Anmeldenummer: 20205803.8
(22) Anmeldetag: 04.11.2020
(51) Int. Cl.: B61B 12/02

(54) **VERFAHREN ZUM BETRIEB EINER SEILBAHNANLAGE UND SEILBAHNANLAGE BETRIEBEN MIT DIESEM VERFAHREN**
METHOD FOR OPERATING A CABLEWAY INSTALLATION AND CABLEWAY INSTALLATION OPERATED WITH THIS METHOD
PROCÉDÉ DE FONCTIONNEMENT D'UNE INSTALLATION DE TÉLÉCABINE ET INSTALLATION DE TÉLÉCABINE FONCTIONNANT SELON LEDIT PROCÉDÉ

(30) Priorität: 01.10.2020 EP 20199645
(43) Veröffentlichungstag der Anmeldung: 06.04.2022
(73) Patentinhaber: Bartholet Maschinenbau AG, 8890 Flums (CH)
(72) Erfinder: BARTHOLET, Roland, 8881 Tscherlach (CH); BETI, Andrea, 7741 San Carlo, Poschiavo (GR) (CH); BECQUET, Pierre, 8880 Walenstadt (CH)
(74) Vertreter: Hepp Wenger Ryffel AG

(56) Entgegenhaltungen:
- EP-A2- 3 581 456
- EP-B1- 3 137 360
- WO-A1-2018/185653
- JP-A- H01 175 560
- US-A- 4 669 389
- US-A- 4 785 738
- US-A1- 2002 007 759

## Beschreibung

Die Erfindung betrifft ein Verfahren zum Betrieb einer Seilbahnanlage sowie eine Seilbahnanlage betrieben mit diesem Verfahren.

### Stand der Technik

Das Dokument EP3137360B1 offenbart eine als Umlaufbahn ausgestaltete Seilbahnanlage umfassend zwei beabstandete Stationen, welche über ein gemeinsames, zwischen den beiden Stationen umlaufendes Zugseil miteinander verbunden sind, sowie umfassend eine Vielzahl von Fahrbetriebsmitteln, welche innerhalb der Stationen selbstfahrend und motorisch angetrieben bewegt werden. Diese Seilbahnanlage weist den Nachteil auf, dass deren Betrieb relativ aufwändig und entsprechend teuer ist. Zudem sind während des Betriebs kaum Anpassungen an sich verändernde Bedürfnisse möglich.

### Darstellung der Erfindung

Aufgabe der Erfindung ist es ein zuverlässigeres, kostengünstigeres und effizienteres Verfahren zum Betrieb einer Seilbahnanlage vorzuschlagen.

Diese Aufgabe wird gelöst durch ein Verfahren aufweisend die Merkmale des unabhängigen Anspruchs 1. Vorteilhafte weitere Verfahrensschritte und Weiterbildungen sind Gegenstand der auf den unabhängigen Anspruch 1 rückbezogenen Unteransprüche sowie der nachfolgenden Beschreibung und der Figuren.

Die Aufgabe wird insbesondere gelöst mit einem Verfahren zum Betrieb einer Seilbahnanlage umfassend eine Mehrzahl von Fahrbetriebsmitteln sowie umfassend eine Mehrzahl von beabstandet angeordneten Stationen, wobei jeweils zwei beabstandete Stationen über ein gemeinsames Zugseil miteinander verbunden sind und eine Umlaufbahn bilden, wobei die Fahrbetriebsmittel innerhalb der Station selbstfahrend und motorisch angetrieben entlang einer Führungsschiene bewegt werden, wobei die Fahrbetriebsmittel beim Ausfahren aus der Station an das Zugseil gekoppelt werden, und wobei die Fahrbetriebsmittel beim Einfahren in die Station vom Zugseil gelöst werden und der Führungsschiene zugeleitet werden, wobei die Umlaufbahn einen Mittelpunkt definiert, der in Verlaufsrichtung des Zugseils mittig zwischen den beabstandeten Stationen der Umlaufbahn angeordnet ist, und wobei die Fahrbetriebsmittel derart von den beiden beabstandeten Stationen der Umlaufbahn dem Zugseil zugeführt und an dieses gekoppelt werden, dass jeweils zwei an das Zugseil gekoppelte, sich in entgegengesetzter Richtung bewegende Fahrbetriebsmittel symmetrisch bezüglich einem in Verlaufsrichtung des Zugseils um bis zu +/- 50 Meter vom Mittelpunkt beabstandeten Symmetriepunkt angeordnet werden. Der Mittelpunkt ist insbesondere mittig zwischen den Umlenkrädern zweier beabstandeter Stationen angeordnet, welche das Zugseil in der Station um vorzugsweise 180° umlenken.

Bevorzugt wird in jeder der beiden beabstandeten Stationen der Umlaufbahn ein Vorrat von beispielweise 5, 10, 20 oder 30 Fahrbetriebsmitteln gespeichert. Die Umlaufbahn kann in einem Leerlaufbetrieb betrieben werden, bei welchem keine Fahrbetriebsmittel an das Zugseil gekoppelt sind, und somit keine Fahrbetriebsmittel zwischen den beiden beabstandeten Stationen unterwegs sind. Vorzugsweise sind zumindest zwei Fahrbetriebsmittel an das Zugseil gekoppelt, die als gegenläufiges Paar von Fahrbetriebsmitteln in entgegengesetzter Richtung zwischen den beiden beabstandeten Stationen der Umlaufbahn unterwegs sind. Besonders bevorzugt sind eine Vielzahl von gegenläufigen Paaren von Fahrbetriebsmitteln, beispielsweise 6, 10 oder 20, an das Zugseil gekoppelt und zwischen den beiden beabstandeten Stationen der Umlaufbahn gegenseitig symmetrisch bezüglich dem Symmetriepunkt unterwegs, wobei jedes gegenläufige Paar von Fahrbetriebsmitteln einen individuellen Symmetriepunkt aufweisen kann, wobei sich die Gesamtheit aller Symmetriepunkte in einem Bereich von vorzugsweise +/- 50 Meter vom Mittelpunkt befinden.

Das erfindungsgemässe Verfahren weist unter anderem den Vorteil auf, dass die Fahrbetriebsmittel der Seilbahnanlage weitgehend individuell bewegbar beziehungsweise verfahrbar sind. Die Fahrbetriebsmittel sind innerhalb der Station entlang von Führungsschienen individuell und selbstfahrend bewegbar. Auch zwischen den Stationen können die Fahrbetriebsmittel weitgehend individuell und vorzugsweise bedarfsabhängig bewegt werden, wobei beim Vorbereiten des Ausfahrens eines gegenläufigen Paars von Fahrbetriebsmittels von den zwei beabstandeten Stationen der Umlaufbahn darauf geachtet wird, dass die Zufuhr dieser zwei Fahrbetriebsmittel von der Führungsschiene zum Zugseil, bzw. deren Ankoppeln an das Zugseil derart synchronisiert wird, vorzugsweise von einer übergeordneten Steuervorrichtung, dass die beiden sich in entgegengesetzter Richtung bewegenden Fahrbetriebsmittel symmetrisch bezüglich einem in Verlaufsrichtung des Zugseils um bis zu +/- 50 Meter, und vorzugsweise von +/- 25 Meter vom Mittelpunkt beabstandeten Symmetriepunkt am Zugseil angeordnet beziehungsweise daran befestig werden. Dadurch sind die gegenläufig durch das Zugseil bewegte Fahrbetriebsmittel betreffend den Mittelpunkt der Umlaufbahn im Wesentlichen symmetrisch und betreffend den Symmetriepunkt symmetrisch auf der Seilbahnanlage unterwegs, was den Vorteil ergibt, dass die Gewichtsverteilung der bewegten Masse der Umlaufbahn im Wesentlichen symmetrisch bezüglich dem Mittelpunkt ist, oder, abhängig von der Anzahl Fahrgäste pro Fahrbetriebsmittel, sich beispielsweise in einem Bereich von weniger als +/- 10% unterscheiden kann, sodass insbesondere auch ein sicheres Bremsen der Umlaufbahn möglich ist. Ansonsten würde die Gefahr bestehen, dass die Gesamtheit aller zu einem gegebenen Zeitpunkt an das Zugseil der Umlaufbahn gekoppelten Fahrbetriebsmittel bezüglich dem Mittelpunkt der Umlaufbahn eine stark asymmetrische Gewichtsverteilung aufweisen könnten, was bezüglich Abbremsen der Umlaufbahn, und insbesondere bezüglich einem Nothalt der Umlaufbahn eine erhebliche Bremsverzerrung und die damit zusammenhängenden Gefahren zur Folge hätte.

Das erfindungsgemässe Verfahren ermöglicht einen wesentlich flexibleren Betrieb der Seilbahnanlage, indem die Fahrbetriebsmittel beispielsweise abhängig vom Beförderungsbedarf dem Zugseil zugeführt werden.

Das erfindungsgemässe Verfahren kann insbesondere gemäss einem oder einer Mehrzahl der nachfolgenden Beispiele betrieben werden:
- Bei einer hohen Anzahl Fahrgäste, und damit verbunden bei einer sehr hoher Betriebsfrequenz, stehen in beiden gegenseitig beabstandeten Stationen der Umlaufbahn in der Regel kontinuierlich Fahrbetriebsmittel mit sich darin befindlichen Fahrgästen zur Abfahrt bereit. Jeweils ein Fahrbetriebsmittel jeder Station der Umlaufbahn wird derart dem Zugseil zugeführt und an dieses angekoppelt, dass diese Fahrbetriebsmittel als gegenläufiges Paar und auf die beschriebene symmetrische Weise zwischen den beiden beabstandeten Stationen der Umlaufbahn verfahren werden. Eine Vielzahl von Paaren von Fahrbetriebsmitteln könne auf diese Weise zeitlich nacheinander mit dem Zugseil verbunden und mit der Umlaufbahn von der einen Station zur entgegengesetzten Station gefördert werden. Die maximale Anzahl beförderbarer Fahrgäste pro Zeiteinheit kann Bedarf abhängig variiert werden durch die Anzahl gleichzeitig an das Zugseil gekoppelter Fahrbetriebsmittel.
- Bei verringertem Aufkommen an Fahrgästen ist nicht mehr sichergestellt, dass jeweils in beiden gegenseitig beabstandeten Stationen der Umlaufbahn Fahrbetriebsmittel mit sich darin befindlichen Fahrgästen zur Abfahrt bereitstehen. In einem solchen Fall kann beispielsweise mit der Ausfahrt eines gegenläufigen Paars von Fahrbetriebsmitteln gewartet werden bis beide Fahrbetriebsmittel mit Fahrgästen besetzt sind, um die Fahrbetriebsmittel danach dem Zugseil zuzuführen. Falls nur bei einer der gegenseitig beabstandeten Stationen der Umlaufbahn ein Fahrbetriebsmittel mit darin befindlichen Fahrgästen zur Abfahrt bereitstehen, so kann in der gegenseitigen Station ein leeres Fahrbetriebsmittel aus dem lokal vorhandenen Vorrat an Fahrbetriebsmitteln benutzt werden, um ein gegenläufiges Paar von Fahrbetriebsmitteln zu bilden, welche dem Zugseil zugeführt und an dieses gekoppelt wird. Dieses Verfahren weist die Vorteile auf, dass Wartezeiten für Fahrgäste verkürzt werden können. Zudem kann bei reduziertem Fahrgastaufkommen auf einfache Weise die Anzahl der zwischen den beiden beabstandeten Stationen der Umlaufbahn fahrenden Fahrbetriebsmittel variiert beziehungsweise reduziert werden, vorzugsweise in Abhängigkeit des Fahrgastaufkommens. Diese Variationsmöglichkeit reduziert beispielsweise auch den Verschleiss der Seilbahnanlage, da gegebenenfalls weniger Fahrbetriebsmittel unterwegs sind, und spart zudem Energie.
- Falls keine Fahrgäste mehr befördert werden möchten, beispielsweise gegen Abend, so verbleiben vorzugsweise alle Fahrbetriebsmittel in der Station. In einem solchen Fall wird vorzugsweise auch die Bewegungsgeschwindigkeit des Zugseils reduziert, um vorzugsweise Antriebsenergie einzusparen, die insbesondere zur Bewegung des Zugseils erforderlich ist. Die Option, dass auch während dem Betrieb der Umlaufbahn keine Fahrbetriebsmittel am Zugseil unterwegs sind, ergibt den Vorteil, dass zum Betriebsende kein Garagieren der Fahrbetriebsmittel mehr erforderlich ist, da diese bereit in der Station angeordnet sind. Dies ermöglicht die Gesamtbetriebszeit der Seilbahnanlage um vorzugsweise zumindest eine halbe Stunde und vorzugsweise um mehr als eine Stunde zu reduzieren, sodass die Seilbahnanlage effizienter und kostengünstiger betreibbar ist.
- Beim Anfahren der Seilbahnanlage, vorzugsweise morgens anlässlich der Inbetriebnahme, sind die Fahrbetriebsmittel in den beiden gegenseitig beabstandenten Stationen der Umlaufbahn angeordnet. Die Fahrbetriebsmittel könnten somit bei der Inbetriebnahme sehr einfach paarweise, in der beschriebenen symmetrischen Weise dem Zugseil zugeführt werden, und die Seilbahnanlage derart in Betrieb genommen werden. Auch bei der Inbetriebnahme ist somit kein aufwendiges Ausgaragieren der Fahrbetriebsmittel erforderlich, was wiederum einen effizienten, kostengünstigen Betrieb ermöglicht.
- Besonders vorteilhaft umfasst die Seilbahnanlage eine Mehrzahl von Umlaufbahnen, beispielsweise zwei, wobei in dieser Konfiguration jeweils eine Station jeder der zwei Umlaufbahnen nahe aneinandergebaut sind und eine gemeinsame Übergangsstation ausbilden. Die gemeinsame Übergangsstation ist vorzugsweise derart ausgebildet, dass über diese Fahrbetriebsmittel zwischen den Umlaufbahnen ausgetauscht werden können, indem die gemeinsame Übergangsstation beispielsweise Führungsschienen und/oder Weichen und/oder Kreuzungen umfasst, über welche Fahrbetriebsmittel, vorzugsweise selbst fahrend, zwischen den Umlaufbahnen bewegt und ausgetauscht werden können. Auch bei dieser Konfiguration können gegenläufige Paare von Fahrbetriebsmitteln auf die hierin beschriebene symmetrische Weise dem Zugseil zugeführt werden.
- Vorteilhafterweise umfasst eine erfindungsgemässe Seilbahnanlage, beispielsweise verwendet als urbane Transportanlage, eine Vielzahl von Umlaufbahnen, sowie eine Vielzahl von Übergangsstationen und Endstationen, welche vorzugsweise ein Netzwerk ausbilden, wobei die Fahrbetriebsmittel in zumindest einem Teil des Netzwerkes und vorzugsweise im gesamten Netzwerk verfahren werden können. Auch bei dieser Konfiguration können gegenläufige Paare von Fahrbetriebsmitteln auf die hierin beschriebene symmetrische Weise dem Zugseil zugeführt werden. Vorzugsweise umfasst jede Station, ob Übergangsstation oder Endstation, einen Vorrat an Fahrbetriebsmitteln. Durch diesen Vorrat an Fahrbetriebsmitteln ist sichergestellt, dass bei der Umlaufbahn zu einem Fahrbetriebsmittel, das dem Zugseil zugeführt werden sollte, in der gegenüberliegenden Station sofort oder sehr schnell ein gegenläufiges Fahrbetriebsmittel bereitgestellt werden kann, um ein gegenläufiges Paar von Fahrbetriebsmitteln zu bilden und diese gegenläufig dem Zugseil zuzuführen. Optional wird als gegenläufiges Fahrbetriebsmittel ein leeres Fahrbetriebsmittel verwendet. Dadurch ist beispielsweise sichergestellt, dass ein in eine Übergansstation einfahrendes, mit Fahrgästen besetzte Fahrbetriebsmittel, schnell und vorzugsweise ohne einen Halt und vorzugsweise selbstfahren der nachfolgenden Umlaufbahn zugeleitet wird, und, da bereits ein leeres Fahrbetriebsmittel an der gegenüberliegenden Station bereit steht, auf die hierin beschriebene symmetrische Weise dem Zugseil zugeführt werden kann und mit diesem verbunden werden kann, und das Fahrbetriebsmittel mit den Fahrgästen somit durch das Zugseil der nächstfolgenden Station zugeführt wird.
- Die erfindungsgemässe Seilbahnanlage umfasst vorzugsweise eine Vielzahl von Umlaufbahnen, sowie eine Vielzahl von Übergangsstationen und Endstationen, welche ein Netzwerk ausbilden. Eine solche Seilbahnanlage weist den Vorteil auf, dass Fahrbetriebsmittel dieses Netzwerk vorzugsweise individuell befahren können, sodass die Fahrbetriebsmittel beispielweise auch ähnlich wie ein Taxi betreibbar sind, indem beispielweise vor der Abfahrt eine Zieldestination bestimmt wird, und das Fahrbetriebsmittel dann bis zur vorgegebenen Zieldestination fährt. Ein derartiges Fahrbetriebsmitteltaxi kann beispielsweise als Sammeltaxi betrieben werden, indem eine Mehrzahl von Fahrgästen an dasselbe Endziel oder zu Stationen in Richtung des Endziels befördert werden. Ein derartiges Fahrbetriebsmitteltaxi kann auch als individuelles Taxi betrieben werden, indem dieses ohne weitere Fahrgäste aufzunehmen, bis zum Endziel fährt, vorzugsweise ohne Zwischenhalte.
- Die erfindungsgemässe Seilbahnanlage kann beispielsweise auch Fahrbetriebsmittel unterschiedlicher Qualität, beispielsweise eine erste Klasse, eine zweite oder einen Sammeltransporter umfassen, oder kann Fahrbetriebsmittel zu unterschiedlichen Themen umfassen, zum Beispiel ein kinderfreundliches Fahrbetriebsmittel oder ein Fahrbetriebsmittel für Touristenunterhaltung. Die in einer Umlaufbahn fahrenden, gegenläufigen Paaren von Fahrbetriebsmitteln können von unterschiedlicher Qualität sei, sodass es beispielsweise auf einfache Weise möglich ist ein Fahrbetriebsmittel erster Klasse oder ein kinderfreundliches Fahrbetriebsmittel individuell entlang der Umlaufbahn oder entlang eines Netzwerten umfassend eine Mehrzahl von Umlaufbahnen zu befördern.
- Die erfindungsgemässe Seilbahnanlage kann beispielsweise auch derart betrieben werden, dass die Fahrbetriebsmittel zumindest zwei unterschiedliche Prioritätsstufen annehmen können, eine Normalfahrt und eine Expressfahrt, und dass die Fahrbetriebsmittel mit der Prioritätsstufe Expressfahrt mit höherer Priorität dem Zugseil zugeleitet werden.
- Die erfindungsgemässe Seilbahnanlage kann beispielsweise auch derart betrieben werden, dass mehrere Fahrbetriebsmittel eine Fahrbetriebsmittelgruppe bilden und mit einem gegenseitigen Abstand von weniger als 10 Metern an das Zugseil gekuppelt werden, und dass in der entgegengesetzten Richtung vorzugsweise dieselbe Anzahl Fahrbetriebsmittel als eine Fahrbetriebsmittelgruppe an das Zugseil gekuppelt werden.

Das Verfahren weist den Vorteil auf, dass mit Fahrgästen besetzte Fahrbetriebsmittel vorzugsweise schnell, individuell und mit geringen Wartezeiten dem Zugseil zuführbar sind und im Netzwerk verfahrbar sind. Das Verfahren weist zudem den Vorteil auf, dass eine Vielzahl von Fahrbetriebsmitteln auf die beschriebene, symmetrische Weise gleichzeitig am Zugseil befestigt unterwegs sein können, und/oder am Zugseil befestigt werden beziehungsweise von diesem gelöst werden. Das Verfahren weist zudem den Vorteil auf, dass ein mit Fahrgästen besetztes Fahrbetriebsmittel vorzugsweise im gesamten Netz bewegbar ist, von einer Ausgangsstation zu einer Endstation, wobei die Fahrgäste vorzugsweise als Einzelperson oder als eine geschlossene Gruppe im Fahrbetriebsmittel unterwegs sind. Ein derart individuelles Reisen mit Fahrbetriebsmitteln, ohne Kontakt mit Fremdpersonen währen dem Reisen, wird insbesondere bei vorhandenen Ansteckungskrankheiten wie Covid-19 sehr geschätzt.

Die Seilbahnanlage kann auch derart betrieben werden, dass die Anzahl Fahrbetriebsmittel, welche in jeder von zwei beabstandeten Stationen einer Umlaufbahn gespeichert sind, verändert wird, indem die Fahrbetriebsmittel derart dem Zugseil zugeführt werden, dass der Abstand zwischen Mittelpunkt und Symmetriepunkt in der einen Förderrichtung erhöht wird, und/oder dass der Abstand zwischen Mittelpunkt und Symmetriepunkt in der entgegengesetzten Förderrichtung reduziert wird.

Das erfindungsgemässe Verfahren ermöglicht einen äusserst flexibleren Betrieb einer Seilbahnanlage, indem die Fahrbetriebsmittel wie beschrieben symmetrisch dem Zugseil zugeführt werden, wobei zwei sich in gegenseitig beabstandeten Stationen einer Umlaufbahn befindliche Fahrbetriebsmittel derart synchronisiert dem Zugseil zugeführt werden, dass die beschriebene, symmetrische Anordnung eingehalten wird. Die Fahrbetriebsmittel können, müssen aber nicht unbedingt gleichzeitig an das Zugseil gekoppelt werden, da zur Einhaltung der Symmetrie ein Distanzbereich vorgegeben ist. Somit ist es auch möglich, dass das Paar gegenläufiger Fahrbetriebsmittel auch zu unterschiedlichen Zeitpunkten mit dem Zugseil verbunden werden, derart, dass die Symmetriebedingung eingehalten wird. Dazu ist eine übergeordnete Steuerungsvorrichtung erforderlich, welche das jeweilige Paar gegenläufiger Fahrbetriebsmittel entsprechend den vorgegebenen Randbedingungen zum Zugseil zuführt.

Erf indungsgemäß umfasst jedes Fahrbetriebsmittel eine Energiespeichervorrichtung, einen Motor, eine Steuervorrichtung sowie einen Generator, wobei jedes Fahrbetriebsmittel während des Ausfahrens aus der Station von einer Beschleunigungseinrichtung angetrieben wird, sodass der Generator während des Ausfahrens aus der Station angetrieben wird, und der Energiespeicher mit der vom Generator erzeugten Energie aufgeladen wird. Diese Ausführungsform weist den Vorteil auf, dass der Energiespeicher vorzugsweise relativ klein und massearm ausgestaltet ist, dass ein zuverlässiges Laden des Energiespeichers gewährleistet ist, dass der Energiespeicher für das selbstfahrende, elektromotorisch angetriebene Bewegen des Fahrbetriebsmittels innerhalb der Station genügen Energie zur Verfügung stellt, und dass das Gesamtgewicht des Fahrbetriebsmittels durch den im Fahrbetriebsmittel angeordneten Energiespeicher nicht wesentlich erhöht wird. Die Fahrbetriebsmittel könnten innerhalb der Station, anstelle oder zusätzlich zum Elektromotor, auch mit einer von Aussen auf das Fahrbetriebsmittel einwirkenden Fördervorrichtung, beispielsweise mit einem Pneuförderer, bewegt werden,
Ein Verfahren zum Betreiben einer Seilbahnanlage umfasst vorzugsweise die folgenden Schritte:
- Befördern eines Fahrzeugs an einem Zugseil, wobei das Fahrzeug über eine Klemmvorrichtung lösbar an das Zugseil gekoppelt ist,
- Abkoppeln des Fahrzeugs von dem Zugseil, wobei die Klemmvorrichtung vom Zugseil gelöst und eine Laufrolle der Klemmvorrichtung derart an eine Führungsschiene gekoppelt wird, dass das Fahrzeug durch die Laufrolle an der Führungsschiene gehalten wird;
- Abbremsen des Fahrzeugs;
- selbsttätiges Fahren des Fahrzeugs entlang der Führungsschiene durch Betreiben einer kinematisch an die Laufrolle gekoppelten elektrischen Maschine des Fahrzeugs als Motor, wobei die elektrische Maschine durch eine elektrische Energiespeichervorrichtung des Fahrzeugs mit elektrischer Energie versorgt wird;
- Beschleunigen des Fahrzeugs mittels einer von aussen auf das Fahrzeug einwirkenden Beschleunigungsvorrichtung; und
- Ankoppeln des Fahrzeugs an das Zugseil, wobei die Klemmvorrichtung mit dem Zugseil verbunden wird.

Vorteilhafterweise wird die elektrische Maschine des Fahrbetriebsmittels, nachfolgend auch als Fahrzeugs bezeichnet, während des Abbremsens und/oder während des Beschleunigens, vorzugsweise im Bereich einer Seilbahnstation, als Generator betrieben und dadurch die elektrische Energiespeichervorrichtung des Fahrzeugs aufgeladen. Vorzugsweise reicht die derart der elektrischen Energiespeichervorrichtung zugeführte elektrische Energie um mit dem Fahrzeug entlang einer Führungsschiene elektromotorisch selbsttätig zu fahren, und insbesondere innerhalb einer Seilbahnstation Wegstrecken zumindest abschnittweise mit Hilfe des elektromotorischen Antriebs selbstfahrend zurückzulegen. Die elektrische Energiespeichervorrichtung wird während eines Normalbetriebs der Seilbahnanlage einzig mit von der elektrischen Maschine erzeugten elektrischen Energie geladen. Bei einer Reparatur oder Wartung der Seilbahnanlage bzw. eines Fahrzeuges kann die elektrische Energiespeichervorrichtung auch ersetzt oder anlässlich der Wartung beispielsweise mit Netzstrom nachgeladen werden. Die elektrische Energiespeichervorrichtung wird während eines normalen Fahrbetriebs der Seilbahnanlage einzig durch die als Generator betriebene elektrische Maschine des Fahrzeugs aufgeladen, sodass keine separate Ladestation bzw. keine separate, fest angeordnete Stromzufuhr erforderlich ist, und das Fahrzeug somit keinerlei elektrische Kontakte benötigt, um eine elektrisch leitende Verbindung zu einer fest angeordneten Stromzufuhr bzw. zur Ladestation herzustellen. Ein Vorteil dieses Verfahrens liegt darin, dass dessen Betrieb wesentlich zuverlässiger ist, da zum Laden der elektrischen Energiespeichervorrichtung keine elektrischen Kontakte zu einer fest angeordneten Stromzufuhr erforderlich ist, sodass das Fahrzeug betreffend Stromzufuhr kontaktlos betrieben werden kann, da die elektrische Energie im Fahrzeug selbst erzeugt wird. Ein weiterer Vorteil dieses Verfahrens liegt darin, dass die Seilbahnanlage wesentlich kostengünstiger herstellbar ist, da auf elektrische Kontakte zwischen einer fest angeordneten Stromzufuhr, z.B. innerhalb der Seilbahnstation, und dem Fahrzeug verzichtet werden kann. Die Fahrzeuge bzw. die Seilbahnanlage sind deshalb zuverlässiger und verschleissarmer betreibbar. Ein weiterer Vorteil dieses Verfahrens liegt darin, dass die Führungsschienen für die Fahrzeuge sehr kostengünstig mit Weichen oder Kreuzungen versehen werden können, da die Fahrzeuge selbsttätig fahren können, und daher ausser der Führungsschiene keine weiteren Hilfsmittel zum Bewegen der Fahrzeuge erforderlich sind.

Die Seilbahnanlage umfasst eine Station, ein in die Station einlaufendes und ein aus der Station auslaufendes Zugseil, eine an der Station im Bereich des auslaufenden Zugseils angeordnete Beschleunigungsvorrichtung, eine sich im Bereich zwischen dem einlaufenden Zugseil und der Beschleunigungsvorrichtung erstreckende Führungsschiene und ein Fahrzeug mit einer Kabine, einer Klemmvorrichtung, welche zur lösbaren Kopplung an das jeweilige Zugseil ausgebildet ist und eine an die Führungsschiene koppelbare Laufrolle aufweist, einem Antrieb mit einer kinematisch an die Laufrolle gekoppelten elektrischen Maschine, welche als Motor und als Generator betreibbar ist, einer elektrischen Energiespeichervorrichtung, welche elektrisch mit der elektrischen Maschine verbunden ist, und einer mit der elektrischen Maschine verbundenen Steuerungsvorrichtung. Die Beschleunigungsvorrichtung ist dazu ausgebildet, das Fahrzeug vor einer Ankopplung der Klemmvorrichtung an das auslaufende Zugseil zu beschleunigen, während die Laufrolle in einem an die Führungsschiene gekoppelten Zustand ist. Weiterhin ist die Steuerungsvorrichtung dazu eingerichtet, die elektrische Maschine während des Beschleunigens des Fahrzeugs durch die Beschleunigungsvorrichtung als Generator zu betreiben und die elektrische Maschine im Bereich zwischen dem einlaufenden Zugseil und der Beschleunigungsvorrichtung zumindest abschnittweise als Motor zu betreiben. Die Beschleunigungsvorrichtung ist vorzugsweise als ein sogenannter Pneuförderer ausgestaltet, vorzugsweise als ein Standardpneuförderer, wie dieser bereits heute bei Seilbahnanlagen zum Abbremsen oder zum Beschleunigen von Fahrzeugen üblicherweise zum Einsatz gelangt.

Jedes Fahrzeug der Seilbahnanlage ist mit einer elektrischen Maschine versehen, welche das Fahrzeug innerhalb einer Station antreibt, so dass das Fahrzeug innerhalb der Station selbsttägig entlang einer Führungsschiene bewegt wird, an welche es über eine Laufrolle gekoppelt ist. Die elektrische Maschine wird hierbei als Motor betrieben, der über einen elektrischen Akkumulator, welcher im Fahrzeug verbaut ist, mit elektrischer Energie versorgt wird und die Laufrolle antreibt.

Ein wesentlicher Aspekt zum Laden des Akkumulators oder der elektrischen Energiespeichervorrichtung besteht darin, dass das Fahrzeug beim Ausfahren aus der Station mittels einer in der Station verbauten Beschleunigungsvorrichtung beschleunigt wird, wodurch der an der Führungsschiene abrollenden Laufrolle kinetische Energie zugeführt wird, welche durch die während des Beschleunigens als Generator betriebene elektrische Maschine in elektrische Energie umgewandelt und in die Energiespeichervorrichtung eingespeist wird. Alternativ oder zusätzlich kann auch beim Abbremsen des Fahrzeugs beim Einfahren in die Station in gleicher Weise kinetische Energie des Fahrzeugs in elektrische Energie umgewandelt werden. Zum Abbremsen des Fahrzeugs wird vorzugsweise ebenfalls ein Pneuförderer verwendet, vorzugsweise ebenfalls ein Standardpneuförderer, wie dieser bereits heute bei Seilbahnanlagen üblicherweise zum Einsatz gelangt.

Ein Vorteil dieser Verfahrensweise liegt darin, dass die elektrische Maschine nicht selbst zur Beschleunigung des Fahrzeugs verwendet wird, sondern die Beschleunigung des Fahrzeugs durch die externe Beschleunigungsvorrichtung erfolgt. Dadurch kann die elektrische Maschine mit geringerer Leistung ausgelegt und mit einem kompakten Aufbau realisiert werden. Ferner kann durch die Beschleunigungsvorrichtung auf effiziente Weise eine Beschleunigung des Fahrzeugs umgesetzt und gleichzeitig eine effiziente Rekuperation bzw. Aufladung des elektrischen Energiespeichers des Fahrzeugs erfolgen. Das erfindungsgemässe Verfahren bzw. die erfindungsgemässe Seilbahnanlange weist den Vorteil auf, dass für Neuanlagen aufweisend das erfindungsgemässe Konzept vorteilhafterweise an sich bekannte, bewährte Pneuförderer verwendet werden können. Zudem ist es auf einfache Weise möglich bestehende Seilbahnanlangen mit dem erfindungsgemässen Konzept zu modifizieren, da die als Beschleunigungsvorrichtungen und Abbremsvorrichtungen ausgestalteten Pneuförderer beibehalten werden können.

Gemäß manchen Ausführungsformen kann vorgesehen sein, dass die elektrische Maschine des Fahrzeugs während des Abbremsens als Generator betrieben wird, um das Fahrzeug abzubremsen. Falls die beim Einfahren in eine Seilbahnstation im Fahrzeug gespeicherte kinetische Energie zu gering sein sollte um mit Hilfe der als Generator betriebenen elektrischen Maschine die Energiespeichervorrichtung während dem Abbremsen des Fahrzeugs genügend zu laden, so kann dem Fahrzeug während des Abbremsens, falls erforderlich, mittels einer von aussen auf das Fahrzeug einwirkenden Antriebs- bzw. Bremsvorrichtung, beispielsweise ausgestaltet als ein Pneuförderer, zusätzliche Antriebsenergie zugeführt wird, und wobei diese zusätzliche Antriebsenergie während des Abbremsens von der als Generator betriebenen elektrischen Maschine aufgenommen wird und dadurch die elektrische Energiespeichervorrichtung aufgeladen wird. Somit kann die während dem Abbremsen des Fahrzeugs durch den Generator erzeugte Energie durch eine in der Station verbaute Antriebsvorrichtung unterstützt werden. Weiterhin kann dadurch zusätzliche Energie zum Aufladen der elektrischen Energiespeichervorrichtung zurückgewonnen werden.

Die Beschleunigungsvorrichtung und/oder die Antriebs- oder Verzögerungsvorrichtung können beispielsweise als Pneuförderer realisiert sein. Beispielsweise kann ein Pneuförderer mehrere hintereinander in einer Reihe angeordneter, drehbar gelagerter Pneus oder Reifen aufweisen, welche mit entlang der Reihe zunehmender oder entlang der Reihe abnehmender Rotationsgeschwindigkeit angetrieben werden. Das Fahrzeug kann somit mit einem Pneuförderer beschleunigt und/oder abgebremst werden.

Gemäß manchen Ausführungsformen kann vorgesehen sein, dass das Fahrzeug beim Abbremsen von einer Zugseilgeschwindigkeit auf eine erste Schienengeschwindigkeit abgebremst wird, wobei das Fahrzeug danach von der als Motor betriebenen elektrischen Maschine angetrieben wird und das Fahrzeug selbsttätig fahrend mit einer zweiten Schienengeschwindigkeit entlang der Führungsschiene gefördert wird. Vorzugsweise sind die erste und die zweite Schienengeschwindigkeit gleich. Die zweite Schienengeschwindigkeit kann insbesondere kleiner 1 m/s sein und kann beispielsweise in einem Bereich zwischen 0,2 m/s und 0,5 m/s liegen.

Gemäß manchen Ausführungsformen kann vorgesehen sein, dass die elektrische Maschine des Fahrzeugs während des Beschleunigens als Generator betrieben und dadurch die elektrische Energiespeichervorrichtung aufgeladen wird.

Gemäß manchen Ausführungsformen kann vorgesehen sein, dass die Laufrolle vor dem Abkoppeln vom Zugseil durch Betreiben der elektrischen Maschine als Motor auf eine Drehzahl beschleunigt wird, bei welcher eine Bahngeschwindigkeit einer Kontaktfläche der Laufrolle im Bereich der Zugseilgeschwindigkeit des Zugseils liegt. Dadurch wird ein besonders sanftes und verschleißarmes Abkoppeln des Fahrzeuges vom Zugseil ermöglicht.

Gemäß manchen Ausführungsformen kann vorgesehen sein, dass die Seilbahnanlage eine an der Station im Bereich des einlaufendes Zugseils angeordnete Antriebsvorrichtung aufweist, wobei die Steuerungsvorrichtung dazu eingerichtet ist, die elektrische Maschine während des Antriebs des Fahrzeugs durch die Antriebsvorrichtung und/oder während des Beschleunigens des Fahrzeugs durch die Beschleunigungsvorrichtung als Generator zu betreiben und die elektrische Maschine im Bereich zwischen der Antriebsvorrichtung und der Beschleunigungsvorrichtung zumindest abschnittweise als Motor zu betreiben.

Gemäß manchen Ausführungsformen kann vorgesehen sein, dass die Klemmvorrichtung ein Traggestell aufweist, an welchem die Laufrolle um eine Drehachse drehbar gelagert ist und an welchem der Antrieb angebracht ist. Das Traggestell kann beispielsweise eine Platte aufweisen, wobei auf einer Seite der Platte der Antrieb mit der elektrischen Maschine und auf einer anderen Seite der Platte die Laufrolle angeordnet ist. Somit wird ein kompakter und stabiler Aufbau der Klemmvorrichtung realisiert.

Gemäß manchen Ausführungsformen kann vorgesehen sein, dass der Antrieb ein Gehäuse, eine erste elektrische Maschine, eine zweite elektrische Maschine und ein an die erste und die zweite elektrische Maschine kinematisch gekoppeltes Getriebe mit einer Verbindungswelle aufweist, welche mit der Laufrolle verbunden ist, wobei die erste und die zweite elektrische Maschine sowie das Getriebe in dem Gehäuse aufgenommen sind. Insbesondere kann vorgesehen sein, dass das Getriebe einen erstes Teilgetriebe und ein zweites Teilgetriebe aufweist, wobei die erste elektrische Maschine zur Drehmomentübertragung an eine Eingangsschnittstelle des ersten Teilgetriebes gekoppelt ist, eine Ausgangsschnittstelle des ersten Teilgetriebes zur Drehmomentübertragung an eine erste Eingangsschnittstelle des zweiten Teilgetriebes gekoppelt ist, die zweite elektrische Maschine zur Drehmomentübertragung an eine parallel zur ersten Eingangsschnittstelle geschaltete zweite Eingangsschnittstelle des zweiten Teilgetriebes gekoppelt ist und die Verbindungswelle eine Ausgangsschnittstelle des zweiten Teilgetriebes bildet. Somit können die Drehmomente von erster und zweiter elektrischer Maschine vorteilhaft überlagert werden. Dies erleichtert den Betrieb der elektrischen Maschinen in einem Drehzahlbereich, in dem diese jeweils ein hohes Drehmoment erzeugen und mit hohem Wirkungsgrad betrieben werden können.

Gemäß manchen Ausführungsformen umfasst das Getriebe optional ein erstes Planetengetriebe, welches z.B. ein erstes Teilgetriebe bildet, und ein zweites Planetengetriebe, welches z.B. ein zweites Teilgetriebe bildet.

In einer vorteilhaften Ausgestaltung umfasst die erfindungsgemässe Seilbahnanlage eine Mehrzahl von Stationen, beispielsweise drei, vier oder fünf Stationen, wobei zumindest eine der Stationen, eine sogenannte Verzweigungs- oder Übergangsstation, über Zugseile mit zumindest drei anderen Stationen verbunden ist, wobei die Verzweigungsstation Führungsschienen mit ansteuerbaren Weichen aufweist, sodass die sich innerhalb der Verzweigungsstationen selbstfahrend entlang den Führungsschienen bewegenden Fahrzeuge über die ansteuerbaren Weichen wahlweise an eine der drei anderen Stationen zugeleitet werden können. Dadurch, dass die Fahrzeuge selbstfahren sind, können die Führungsschienen auf einfache Weise mit Weichen und/oder Kreuzungen versehen sein, welche von den Fahrzeugen befahrbar sind, wobei diese Weichen und Kreuzungen vorzugsweise sehr kostengünstig ausgestaltet sind. Die erfindungsgemässe Seilbahnanlage kann in einer vorteilhaften Ausgestaltung als Netzwerk umfassend eine Vielzahl von Stationen ausgestaltet sein, wobei zumindest eine der Stationen und vorzugsweise eine Mehrzahl von Stationen als Verzweigungsstationen ausgestaltet sind, sodass jedes Fahrzeuge, durch ein entsprechendes Stellen der Weichen, wählbar eine einzige oder mehrere aus der Vielzahl von Stationen anfahren kann, und sich in einer Vielzahl von Möglichkeiten im Netzwerk bewegen kann.

Unter dem Begriff Umlaufbahn wird hierin eine Umlaufseilbahn beziehungsweise eine Luftseilbahn verstanden, deren Fahrbetriebsmittel auf zwei Fahrbahnseiten umlaufend bewegt werden, wobei die Fahrbetriebsmittel an ein Förderseil oder ein Zugseil koppelbar sind, und derart von der einen Station zur andern Station gefördert werden, und wobei die Fahrbetriebsmittel bei der Station vom Förderseil oder dem Zugseil entkoppelt werden, und wobei die Fahrbetriebsmittel in der Station entlang einer Führung bewegt werden. Eine solche Umlaufbahn ist beispielsweise als Kabinenseilbahn, auch Gondelbahn genannt, oder als Sesselbahn ausgestaltet. Eine solche Umlaufbahn kann als sogenannte Zweiseil-Umlaufbahn ausgestaltet sein, umfassend ein Tragseil zum Tragen des Fahrbetriebsmittels und ein Zugseil zum Ziehen des Fahrbetriebsmittels, oder als Einseil-Umlaufbahn, umfassend ein Förderseil, das sowohl die tragende als auch die ziehende Funktion übernimmt. Zudem sind Umlaufbahnen mit einer Mehrzahl von Trag- und/oder Zug- und/oder Förderseilen bekannt. Zum besseren Verständnis wird hierin der Begriff "Zugseil" verwendet, wobei dieses Zugseil abhängig von der Ausgestaltung der Umlaufbahn als Zugseil oder als Förderseil verwendet wird.

Die Erfindung wird anhand der nachfolgenden Figuren näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile sind mit denselben Bezugszeichen bezeichnet. Um die erfindungsgemässe Funktionsweise veranschaulichen zu können, sind in den Figuren vereinfachte Prinzipdarstellungen gezeigt, bei denen manche Elemente einer Seilbahnanlage wegen einer besseren Übersichtlichkeit nicht dargestellt sind.

Dies bedeutet jedoch nicht, dass derartige Bauteile bei einer erfindungsgemäßen Lösung nicht vorhanden sind.

### Kurze Beschreibung der Figuren

Die zur Erläuterung der Ausführungsbeispiele verwendeten Figuren zeigen:
- Fig. 1: eine schematische Darstellung einer Seilbahnanlage gemäß einem Ausführungsbeispiel der Erfindung;
- Fig. 2: eine schematische Darstellung eines Seilbahnanlagen umfassend ein Netzwerk mit einer Mehrzahl von Umlaufbahnen;
- Fig. 3: eine schematische Darstellung eines Blockschaltbilds einer Seilbahnanlage gemäß einem Ausführungsbeispiel der Erfindung;
- Fig. 4: eine perspektivische Teilansicht einer an ein Zugseil gekoppelten Klemmvorrichtung gemäß einem Ausführungsbeispiel der Erfindung, wobei die Kabine des Fahrzeuges schematisch dargestellt ist;
- Fig. 5: eine perspektivische Ansicht einer Klemmvorrichtung des in Fig. 4 gezeigten Fahrzeugs;
- Fig. 6: eine schematische Teilansicht einer Seilbahnanlage gemäß einem Ausführungsbeispiel der Erfindung in einem Zustand, in welchem das Fahrzeug durch einen ersten Pneuförderer abgebremst wird;
- Fig. 7: eine perspektivische Teilansicht eines als Beschleunigungsvorrichtung ausgestalteten zweiten Pneuförderers;
- Fig. 8: ein Flussdiagramm eines Verfahrens zum Betreiben einer Seilbahnanlage gemäß einem Ausführungsbeispiel der Erfindung;
- Fig. 9: eine schematische Ansicht einer Station;
- Fig. 10: eine schematische Ansicht von zwei Stationen, die eine gemeinsame Übergangsstation ausbilden;
- Fig. 11: eine schematische Ansicht von drei Stationen, die eine gemeinsame Übergangsstation ausbilden.

Grundsätzlich sind in den Figuren gleiche Teile mit gleichen Bezugszeichen versehen.

### Wege zur Ausführung der Erfindung

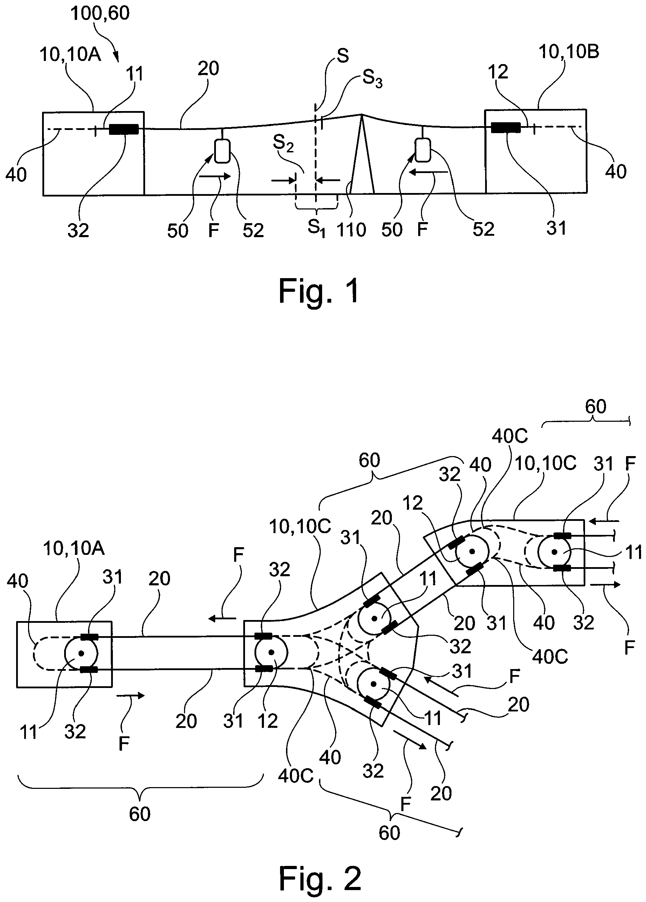

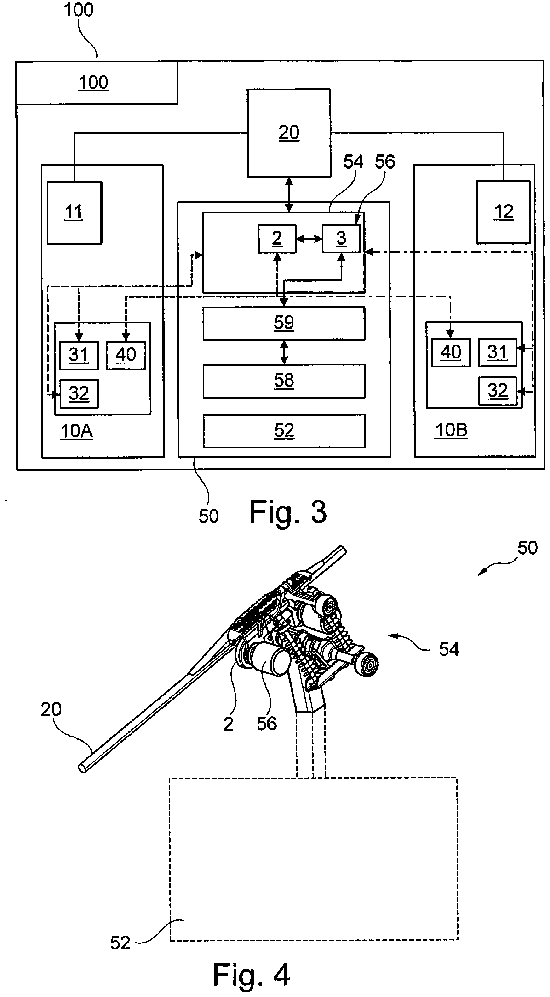

Fig. 1 zeigt beispielhaft eine Seilbahnanlage 100 in einer schematischen Darstellung. Fig. 3 zeigt beispielhaft ein Blockschaltbild der in Fig. 1 dargestellten Seilbahnanlage 100.

Wie in Fig. 1 schematisch dargestellt umfasst die Seilbahnanlage 100 zumindest zwei gegenseitig beabstandete Stationen 10, insbesondere eine erste Station 10A und eine zweite Station 10B, ein in eine jeweilige Station 10 einlaufendes und auslaufendes Zugseil 20 und zwei an das Zugseil 20 gekoppelte Fahrzeuge 50, welche außerhalb der Station 10, z.B. zwischen der ersten und der zweiten Station 10A, 10B an dem bzw. durch das Zugseil 20 befördert werden. Das Zugseil 20 ist vorzugsweise endlos ausgestaltet und wird vorzugsweise innerhalb jeder Station 10A, 10B durch einen Seilantrieb 11 und/oder ein Zugseilumlenkrad 12 um 180° umgelenkt, sodass die Seilbahnanlagen 100 zwischen den Stationen 10A, 10B zwei sich gegenläufig bewegende Zugseilabschnitte aufweist und die Seilbahnanlage 100 eine Umlaufbahn 60 ausbildet, wobei in der Seitenansicht gemäss Figur 1 nur einer der beiden Zugseilabschnitte sichtbar ist. In Fig. 1 ist rein beispielhaft gezeigt, dass die Fahrzeuge 50 hängend an einem Seil, z.B. dem Zugseil 20 oder einem separaten Tragseil (nicht gezeigt), durch die vom Zugseil 20 bewirkten Antriebskräfte zwischen den Stationen 10A, 10B bewegt werden. Das Zugseil 20 und gegebenenfalls das optionale Tragseil können zwischen den Stationen 10A, 10B optional durch einen oder mehrere Masten oder Träger 110 gestützt sein, wie dies in Fig. 1 beispielhaft dargestellt ist. Jede der dargestellten Stationen 10 umfasst eine Verzögerungsvorrichtung 31, zum Abbremsen des Fahrzeugs 50 und zur Übergabe des Fahrzeugs 50 vom Zugseil 20 an eine Führungsschiene 40, und umfasst eine Beschleunigungsvorrichtung 32 zur Übergabe eines sich auf der Führungsschiene 40 befindlichen Fahrzeugs 50 an das Zugseil 20.
Die Fahrzeuge 50 bewegen sich innerhalb der Station 10 vorzugsweise selbstfahrend und individuell elektromotorisch angetrieben entlang der Führungsschiene 40. Bezüglich der beiden beabstandeten Stationen 10A, 10B weist das Zugseil 40 der Umlaufbahn 60 bzw. die Umlaufbahn 60 einen Mittelpunkt S auf, der in Verlaufsrichtung des Zugseils 40 mittig zwischen den beabstandeten Stationen 10 der Umlaufbahn 60 angeordnet ist. Die Fahrzeuge 50 werden derart von den beiden beabstandeten Stationen 10 der Umlaufbahn 60 dem Zugseil 40 zugeführt und an dieses gekoppelt, dass jeweils zwei an das Zugseil 40 gekoppelte, sich in entgegengesetzter Förderrichtung F bewegende Fahrbetriebsmittel 50 symmetrisch bezüglich einem in Verlaufsrichtung des Zugseils 40 in einem Symmetriepunktbereich S₁ um eine Distanz S₂ von bis zu +/- 50 Meter vom Mittelpunkt S beabstandeten Symmetriepunkt S₃ angeordnet werden. Basierend auf diesem Verfahren können gleichzeitig auch eine Mehrzahl von Paaren von sich entgegengesetzt bewegenden Fahrzeugen 50 auf der Umlaufbahn 60 bzw. entlang des Zugseils 20 unterwegs sein, wobei jedes Paar von sich entgegengesetzt bewegenden Fahrzeugen 50 einen individuelle Symmetriepunkt S₃ aufweisen kann, der im Symmetriepunktbereich S₁ liegt.

Vorzugsweise ist in jeder der Stationen 10 der Umlaufbahn 60 ein in Fig. 1 nicht dargestellter Vorrat V an Fahrbetriebsmitteln 50 gespeichert, beispielsweise 5, 10, 20 oder 50 Fahrbetriebsmittel.

Figur 2 zeigt schematisch eine Draufsicht auf eine Seilbahnanlage 100 umfassend ein Netzwerk bestehend aus einer Mehrzahl von Umlaufbahnen 60, wobei gewisse Stationen 10 als Übergangsstationen 10C ausgestaltet sein, welche über Führungsschienen 40 umfassend Weichen 40C und allenfalls Kreuzungen 40D einen Austausch von Fahrzeugen 50 zwischen den einzelnen Umlaufbahnen 60 erlauben. Vorzugsweise befindet sich in jeder Station ein Vorrat V an Fahrbetriebsmitteln 50. Die Fahrbetriebsmittel 50 sind in Fig. 2 nicht dargestellt.

Fig. 3 zeigt rein beispielhaft ein Blockschaltbild der in Figur 1 dargestellten Seilbahnanlage 100 bzw. der Umlaufbahn 60. Wie in Fig. 3 beispielhaft gezeigt, kann die Seilbahnanlage eine Station 10, z.B. eine erste Station 10A und eine zweite Station 10B, ein in die jeweilige Station 10A, 10B einlaufendes und ein aus der jeweiligen Station 10B auslaufendes Zugseil 20 sowie eine Mehrzahl vonFahrzeugen 50 aufweisen. Von dieser Mehrzahl von Fahrzeugen 50 ist in Fig. 2 nur ein einziges dargestellt. Die Seilbahnanlage 100 umfasst zudem eine übergeordnete Steuerungsvorrichtung 101, mit welcher vorzugsweise die Gesamtheit aller Fahrzeuge 50 angesteuert wird. Vorzugsweise ist die Position jedes Fahrzeugs 50 innerhalb der Seilbahnanlage 100 bekannt, beispielsweise indem jedes Fahrzeug 50 ein GPS-Signal empfängt, und vorzugsweise werden alle relevanten Daten eines Fahrzeugs 50, insbesondere dessen Position im Raum, der übergeordneten Steuerungsvorrichtung 101 zugeleitet. Vorzugsweise besteht zwischen der übergeordneten Steuerungsvorrichtung 101 und jedem Fahrzeug 50 eine vorzugsweise drahtlose Zweiwegkommunikation zur Übertragung von Daten. Einem Fachmann ist verständlich, dass zum sicheren Betrieb der Seilbahnanlage 100 eine Vielzahl von Sensoren erforderlich sind, deren Daten vorzugsweise mit übergeordneten Steuerungsvorrichtung 101 ausgetauscht werden, wobei diese Sensoren und Daten hierin nicht im Detail beschrieben sind,

Wie in Fig. 3 beispielhaft gezeigt, kann jede Station 10A, 10B eine Beschleunigungs- oder Antriebsvorrichtung 32 und/oder eine Verzögerungs- oder Abbremsvorrichtung 31 umfassen, z.B. eine Verzögerungsvorrichtung 31 in Form eines ersten Pneuförderers, eine Beschleunigungsvorrichtung 32, z.B. in Form eines zweiten Pneuförderers, und eine Führungsschiene 40. In Fig. 3 ist ferner schematisch dargestellt, dass die erste Station 10A einen Seilantrieb 11 zum Antreiben des Zugseils 20 und die zweite Station 10B einen Zugseilumlenkrad 12 zum Umlenken des Zugseils 20 aufweist. Selbstverständlich können auch in beiden Stationen 10A, 10B Seilantriebe 11 vorgesehen sein.

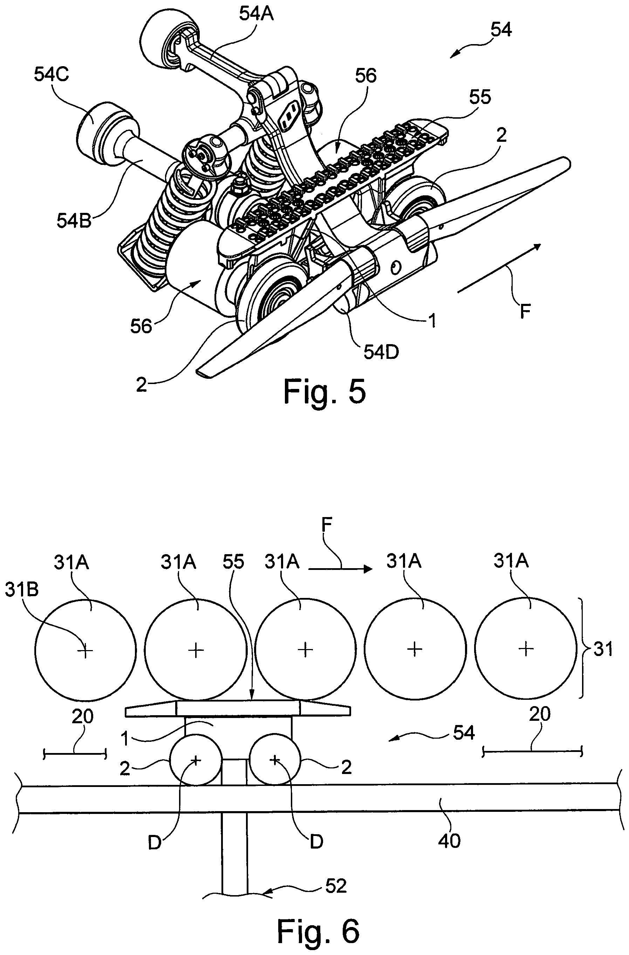

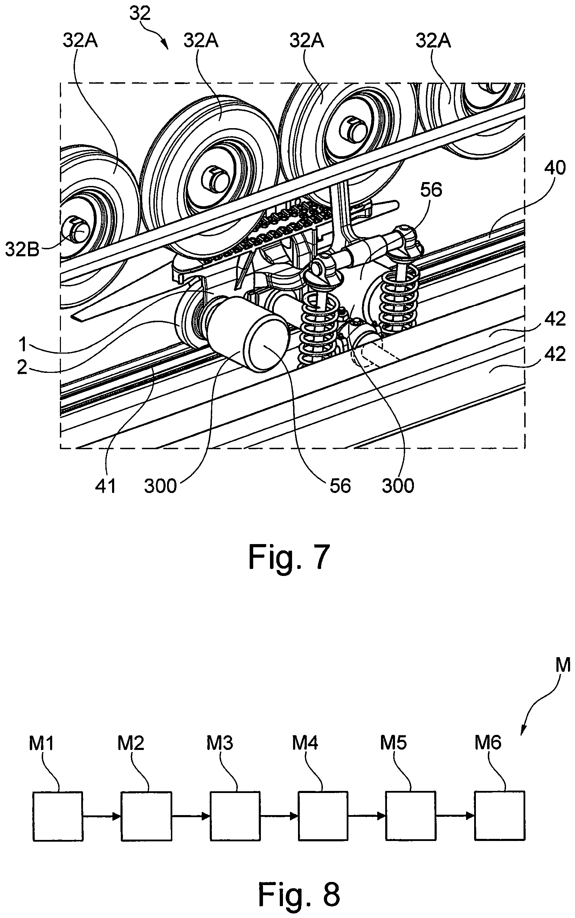

Die Stationen 10A, 10B können beispielsweise durch Bauwerke realisiert sein, in welche das Zugseil 20 ein- und ausläuft, wie dies in Fig. 1 und Fig. 2 schematisch dargestellt ist. Fig. 6 zeigt rein beispielhaft und lediglich schematisch einen Ausschnitt einer Station 10 im Bereich des einlaufenden Zugseils 20. Fig. 7 zeigt beispielhaft einen Ausschnitt einer Station 10 im Bereich des auslaufenden Zugseils 20.

Wie in Fig. 6 schematisch dargestellt, ist die optionale Antriebs- oder die Abbrems- bzw. Verzögerungsvorrichtung 31, welche hier als erster Pneuförderer 31 realisiert ist, im Bereich des einlaufenden Zugseils 20 angeordnet. Der erste Pneuförderer 31 kann beispielsweise eine Vielzahl in einer Reihe angeordneter Pneus oder Rollen 31A aufweisen, wobei jede Rolle 31A um eine Drehachse 31B drehbar und durch einen Rollenantrieb (nicht gezeigt) um die Drehachse 31B rotierbar ist. Insbesondere sind die Rollen 31B derart rotierbar, dass eine Drehzahl der Rollen 31A in Fahrtrichtung F von einer ersten Rolle 31A der Reihe zu der letzten Rolle 31A der Reihe stetig abnimmt. Wie in Fig. 6 ferner schematisch gezeigt ist, kann sich die Führungsschiene 40 parallel zu bzw. gegenüberliegend der Rollen 31A erstrecken. Eine beim ersten Pneuförderer 31 einfahrendes Fahrzeug 50 mit Kabine 52 wird beispielsweise im einem Zeitbereich von 3 bis 10 Sekunden, vorzugsweise in einem Zeitbereich von 4 bis 6 Sekunden von einer Einfahrgeschwindigkeit, welche beispielsweise mehr als 6 m/s beträgt, auf eine erste Schienengeschwindigkeit von beispielsweise weniger als 1 m/s abgebremst. Zum Abbau der kinetischen Energie des einfahrenden Fahrzeuges steht somit ein Zeitbereich von 3 bis 10 Sekunden oder von 4 bis 6 Sekunden zur Verfügung, während dem der Antrieb 56 während dem Einfahren in die Station generatorisch betrieben wird, um mit der dadurch erzeugten elektrischen Energie die Energiespeichervorrichtung 58 zu laden. Beim Einfahren in die Station werden vorzugsweise die elektrische Maschine 3 jedes Antriebs 56 generatorisch betrieben. Ein Fahrzeug 50 umfasst zumindest einen einzigen Antrieb 56, und vorzugsweise, wie in Figur 5 dargestellt, zwei in Fahrtrichtung F nacheinander angeordnete Antriebe 56, wobei auch zusätzliche, in Fahrtrichtung F gegenseitig beabstandete Antriebe 56 angeordnet sein, können, beispielsweise drei, vier oder fünf. Es ist auch möglich beim Einfahren auf den ersten Pneuförderer 31 zu verzichten, wenn die gesamte Bremsleistung von Fahrzeug 50 bzw. dessen Antriebe 56 aufgenommen wird bzw. erbracht wird.

Wie in Fig. 7 beispielhaft gezeigt, kann die Beschleunigungsvorrichtung als zweiter Pneuförderer 32 realisiert sein, welcher im Bereich des auslaufenden Zugseils 20 angeordnet ist. Der zweite Pneuförderer 32 kann beispielsweise eine Vielzahl in einer Reihe angeordneter Pneus oder Rollen 32A aufweisen, wobei jede Rolle 32A um eine Drehachse 32B drehbar und durch einen Rollenantrieb (nicht gezeigt) um die Drehachse 32B rotierbar ist. Insbesondere sind die Rollen 32B derart rotierbar, dass eine Drehzahl der Rollen 32A von einer ersten Rolle 32A der Reihe zu der letzten Rolle 32A der Reihe stetig zunimmt. Wie in Fig. 7 ferner schematisch gezeigt ist, kann sich die Führungsschiene 40 parallel zu bzw. gegenüberliegend der Rollen 32A erstrecken.

Die Führungsschiene 40 erstreckt sich allgemein in einem Bereich zwischen dem einlaufenden Zugseil 20 und der Beschleunigungsvorrichtung 32. Wie in Fig. 7 beispielhaft gezeigt ist, kann optional eine seitliche Führung 41 vorgesehen sein, welche seitlich einer Führungsfläche der Führungsschiene 40 angeordnet ist, um ein seitliches Abrutschen der Laufrolle 2 von der Führungsschiene 40 zu verhindern. Weiterhin kann eine Tragschiene 42 vorgesehen sein, welche sich parallel zur Führungsschiene 40 erstreckt, wie dies in Fig. 7 beispielhaft gezeigt ist. Wie in Figur 5 dargestellt umfasst die Klemmvorrichtung 54 im dargestellten Beispiel eine Stützrolle 54C und zwei Laufrollen 2. Die Laufrollen sind von der Führungsschiene 40 gehalten und die Stützrolle 54C ist von der Tragschiene 42 gehalten, sodass die Führungsschiene 40 und die Tragschiene 42 eine gemeinsame Schiene ausbilden, entlang welcher sich die Klemmvorrichtung 54 bewegt. An der Tragschiene 42 oder der Führungsschiene 40 können beispielsweise Sensoren, Leitungen oder ähnliche Funktionskomponenten der Seilbahnanlage 100 angebracht sein. Die Klemmvorrichtung 54 ist in der Lage sich elektromotorisch angetrieben selbsttätig entlang der gemeinsamen Schiene zu bewegen, sodass das Fahrzeug 50 umfassend die Klemmvorrichtung 54 und die daran hängende Kabine 52 selbsttätig bewegt wird. Wieder unter Bezugnahme auf Fig. 3, kann das Fahrzeug 50 eine Kabine 52, eine Klemmvorrichtung 54, einen Antrieb 56, eine elektrische Energiespeichervorrichtung 58 und eine Steuerungsvorrichtung 59 aufweisen.

Fig. 4 zeigt rein beispielhaft ein Fahrzeug 50, welches mittels der Klemmvorrichtung 54 direkt an das Zugseil 20 gekoppelt ist. Die Kabine 52 kann beispielsweise zur Personenbeförderung ausgelegt sein. Insbesondere kann die Kabine 52 als geschlossene Kabine realisiert sein, wie dies in Fig. 4 beispielhaft angedeutet ist. Jedoch ist die Erfindung nicht hierauf beschränkt. Selbstverständlich kann die Kabine 52 auch ein offener Sitz für eine oder mehrere Personen sein oder allgemein ein Behälter, wie z.B. ein Lastenkorb oder ähnliches.

Eine Klemmvorrichtung 54 ist in Fig. 5 beispielhaft dargestellt. Die Klemmvorrichtung 54 umfasst ein Traggestell 1, zumindest eine an dem Traggestell 1 um eine Drehachse D drehbar gelagerte Laufrolle 2 und den Antrieb 56. Wie in Fig. 5 beispielhaft dargestellt ist, kann die Klemmvorrichtung 54 besonders bevorzugt zwei in Förderrichtung F nacheinander folgend angeordneten Laufrollen 2 aufweisen, wobei vorzugsweise für jede Laufrolle 2 je ein separater Antrieb 56 vorgesehen ist. Eine derartige Ausgestaltung mit zwei Laufrollen 2 mit je einem separatem Antrieb 56 weist den Vorteil einer redundanten Ausgestaltung auf, weil bei einem Defekt eines der Antriebe 56 das Fahrzeug immer noch selbsttätig entlang der gemeinsamen Schiene bewegt werden kann.

Wie in Fig. 5 weiterhin sichtbar, können der Antrieb 56 und die Laufrolle 2 an entgegengesetzten Seiten des Traggestells 1 angeordnet sein. Der Antrieb 56 kann an dem Traggestell 1 festgelegt sein, beispielsweise kann ein Gehäuse 300 des Antriebs 56 an dem Traggestellt 1 befestigt, z.B. mit diesem verschraubt sein. Wie in Fig. 5 weiterhin beispielhaft gezeigt, kann die Klemmvorrichtung 54 eine Angriffsfläche 55 zur Kontaktierung mit den Pneus 31A, 32A der Pneuförderer 31, 32 aufweisen. Die Angriffsfläche 55 kann beispielsweise abgewandt von der Laufrolle 2 orientiert und an einem mit dem Traggestellt 1 fest verbundenen Steg 4 vorgesehen sein, wie dies in Fig. 5 beispielhaft gezeigt ist.

Die Klemmvorrichtung 54 umfasst ferner einen Klemmmechanismus, welcher zur lösbaren Kopplung an das Zugseil 20 ausgebildet ist. Wie in Fig. 5 rein beispielhaft gezeigt, kann der Klemmmechanismus einen Steuerhebel 54A, eine Achse 54B, eine Stützrolle 54C und Klemmbacken 54D aufweisen. Die Achse 54B ist fest mit dem Traggestell 1 verbunden und der Steuerhebel 54A ist an dem Traggestellt 1 relativ zu der Achse 54B bewegbar gelagert, wobei die Klemmbacken 54D derart kinematisch an das Traggestell 1 und den Steuerhebel 54A gekoppelt sind, dass diese durch eine Bewegung des Steuerhebels 54A relativ zur Achse 54B zwischen einer Klemmstellung, in welchen das Zugseil 20 reibschlüssig zwischen den Backen 54D eingeklemmt ist, und einer offenen Stellung bewegbar sind, in welcher die Backen 54D von dem Zugseil 20 gelöst sind. Grundsätzlich sind auch andere Klemmmechanismen denkbar.

Der Klemmmechanismus kann insbesondere durch eine mechanische Betätigungsstruktur (nicht gezeigt), z.B. in Form einer Schienenanordnung, automatisiert beim Einfahren des Fahrzeugs 50 in die Station 10 und beim Ausfahren des Fahrzeugs 50 aus der Station 10 betätigbar sein.

Wie insbesondere in den Fign. 6 und 7 schematisch dargestellt ist, ist die Laufrolle 2 der Klemmvorrichtung 54 an die Führungsschiene 40 koppelbar, insbesondere derart, dass die Laufrolle 2 an der Führungsschiene 40 rollt und da Fahrzeug 50 mittels der Laufrolle 2 an der Führungsschiene 40 gehalten wird, wobei die Führungsschiene 40 die Laufrollen 2 führt und trägt. Auf die Tragschiene 42 könnte verzichtet werden. Bevorzugt wird jedoch eine gemeinsame Schiene umfassen die Führungsschiene 40 und die Tagscheine 42 verwendet, um die Klemmvorrichtung 54 zu tragen und deren Bewegung innerhalb der Station 10 zu leiten.

Das Fahrzeug 50 kann somit durch die Klemmvorrichtung 54 durch Betätigung des Klemmmechanismus von dem Zugseil entkoppelt werden, wenn es in die Station 10 einfährt. Vor, während oder nach dem Entkoppeln vom Zugseil 20 kann das Fahrzeug 50 über die Laufrolle 2 an die Führungsschiene 40 gekoppelt und an dieser geführt oder von dieser getragen werden, wie dies in Fig. 5 schematisch dargestellt ist. Nach dem Abkoppeln vom Zugseil 20, wenn die Laufrolle 2 an die Führungsschiene 40 gekoppelt ist, kann mittels der Antriebs- oder Abbremsvorrichtung bzw. des ersten Pneuförderers 31 ein Abbremsen des Fahrzeugs 50 erfolgen, wobei der als Generator betriebene Antrieb 56 das Fahrzeug 50 zusätzlich abbremst. Wenn die Antriebs- oder Abbremsvorrichtung als Pneuförderer 31 realisiert ist, wie in Fig. 6 beispielhaft dargestellt, kommt die Angriffsfläche 55 der Klemmvorrichtung 54 nach dem Abkoppeln vom Zugseil 20 sukzessive mit den in Reihe angeordneten Pneus 31A in Kontakt, deren Drehzahl entlang der Reihe abnimmt. Dadurch wird der Klemmvorrichtung 54 über die Fläche 55 und damit dem Fahrzeug 50 die Bahngeschwindigkeit der Pneus 31A aufgezwungen. Grundsätzlich sind auch andere Antriebs- bzw. Abbremsvorrichtungen zum Abbremsen des Fahrzeugs 50 denkbar.

Nach einer Stationsdurchfahrt an der Führungsschiene 40 gelangt das Fahrzeug 50 zu der Beschleunigungsvorrichtung 32. Wenn diese, wie in Fig. 7 beispielhaft gezeigt, als Pneuförderer 32 realisiert ist, kommt die Angriffsfläche 55 der Klemmvorrichtung 54, während das Fahrzeug 50 über die Laufrolle 2 an der Führungsschiene 40 geführt ist, sukzessive mit den in Reihe angeordneten Pneus 32A in Kontakt, deren Drehzahl entlang der Reihe zunimmt. Dadurch wird der Klemmvorrichtung 54 über die Fläche 55 und damit dem Fahrzeug 50 die Bahngeschwindigkeit der Pneus 32A aufgezwungen und das Fahrzeug dadurch auf die Zugseilgeschwindigkeit beschleunigt. Auch in diesem Fall sind andere Gestaltungen der Beschleunigungsvorrichtung denkbar. Die Beschleunigungsvorrichtung 32 ist allgemein dazu ausgebildet, das Fahrzeug 50 vor einer Ankopplung der Klemmvorrichtung 54 an das auslaufende Zugseil 20 zu beschleunigen, während die Laufrolle 2 in einem an die Führungsschiene 40 gekoppelten Zustand ist

Wie in Fig. 3 schematisch gezeigt, weist der Antrieb 56 eine elektrische Maschine 3 auf, welche kinematisch an die Laufrolle 2 gekoppelt ist. Der Antrieb 56 dient dazu, die Laufrolle 2 anzutreiben bzw. zu rotieren. Hierzu ist eine durch die elektrische Maschine 3 angetriebene Welle kinematisch an die Laufrolle 2 gekoppelt. Die elektrische Maschine 3 ist sowohl als Motor als auch als Generator betreibbar. Das heißt, eine Rotation der Laufrolle 2 kann auch über die Welle als kinetische Energie an die elektrische Maschine 3 übertragen werden, welche die kinetische Energie in elektrische Energie umwandelt.

Nachfolgend wird wieder auf Fig. 3 Bezug genommen, um die Seilbahnanlage 100 weiter zu erläutern. Wie in Fig. 3 schematisch gezeigt, ist die elektrische Energiespeichervorrichtung 58, elektrisch mit der elektrischen Maschine 3 des Antriebs 56 verbunden. Die Energiespeichervorrichtung 58, welche z.B. in einem Boden oder einer anderen Komponente der Kabine 52 untergebracht sein kann, ist als Akkumulator realisiert. Somit kann die elektrische Energiespeichervorrichtung 58 elektrische Energie abgeben, um die elektrische Maschine 3 anzutreiben, wenn diese als Motor betrieben wird. Umgekehrt kann die von der elektrischen Maschine 3 in einem Generatorbetrieb erzeugte elektrische Energie in die Energiespeichervorrichtung 58 eingespeist werden.

Die Steuerungsvorrichtung 59 ist in Fig. 3 lediglich als Block dargestellt und kann insbesondere eine leistungselektronische Schaltung, wie einen Umrichter oder dergleichen aufweisen. Optional kann die Steuerungsvorrichtung 59 auch einen Prozessor und einen durch den Prozessor lesbaren Datenspeicher, insbesondere einen nicht-flüchtigen Datenspeicher, wie z.B. einen Flash-Speicher, einen SSD-Speicher, einen HDD-Speicher oder dergleichen aufweisen. Die Steuerungsvorrichtung 59 ist mit der elektrischen Maschine 3 und vorzugsweise auch mit der Energiespeichervorrichtung 58 signalverbunden.

Die Steuerungsvorrichtung 59 ist insbesondere dazu eingerichtet, die elektrische Maschine 3 zwischen einem Generatorbetrieb und einem Motorbetrieb umzuschalten. Beispielsweise kann die Steuerungsvorrichtung 59 dazu eingerichtet sein, die elektrische Maschine 3 anzusteuern, um deren Drehzahl, Drehrichtung und deren Betrieb als Motor oder Generator zu ändern. Insbesondere kann die Steuerungsvorrichtung 59 dazu eingerichtet sein, die elektrische Maschine 3 während eines Beschleunigens des Fahrzeugs 50 durch die Beschleunigungsvorrichtung 32 als Generator zu betreiben. Dadurch kann die Energiespeichervorrichtung 58 mithilfe der dem Fahrzeug 50 über die Beschleunigungsvorrichtung 32 zugeführten Energie aufgeladen werden. Alternativ oder zusätzlich kann die Steuerungsvorrichtung 59 dazu eingerichtet sein, die elektrische Maschine 3 während des Antriebs des Fahrzeugs 50 durch die Antriebs- oder Abbremsvorrichtung 31 als Generator zu betreiben.

Ferner kann die Steuerungsvorrichtung 59 dazu eingerichtet sein, die elektrische Maschine 3 im Bereich zwischen dem einlaufenden Zugseil 20 und der Beschleunigungsvorrichtung 32 zumindest abschnittweise als Motor zu betreiben. Somit kann das Fahrzeug 50 selbsttätig eine Stationsdurchfahrt oder andere Fahrmanöver, z.B. eine Vorwärtsfahrt mit anschliessender Rückwärtsfahrt oder ein Garagieren des Fahrzeuges, ausführen, wenn diese über die Laufrolle 2 an die Führungsschiene 40 gekoppelt ist.

Die Steuerungsvorrichtung 59 ist vorzugsweise mit einem GPS-Empfänger verbunden, und ist vorzugsweise datenübertragend mit der übergeordneten Steuerungsvorrichtung 101 verbunden.

In Fig. 8 ist schematisch und rein beispielhaft ein Ablauf eines Verfahrens M zum Betreiben einer Seilbahnanlage 100 dargestellt, welches im Folgenden, ohne hierauf beschränkt zu sein, unter Bezugnahme auf die oben erläuterte Seilbahnanlage 100 erläutert wird.

Wie in Fig. 8 gezeigt, wird das Fahrzeug 50 in Schritt M1 an dem Zugseil 20 befördert. Hierbei ist das Fahrzeug 50 über eine Klemmvorrichtung 54 lösbar an das Zugseil 20 gekoppelt, bzw. werden ein Paar von zwei gegenläufigen Fahrzeuge 50 in zwei gegenseitig beabstandeten Stationen dem Zugseil 20 zugeführt und das dieses gekoppelt. Beispielsweise befinden sich die Klemmbacken 54D des Klemmmechanismus in der Klemmstellung. Das Fahrzeug 50 wird in diesem Schritt M1 durch das Zugseil 20 gezogen, welches seinerseits durch den Seilantrieb 11 (Fig. 1) mit einer Zugseilgeschwindigkeit angetrieben wird, welche beispielsweise in einem Bereich zwischen 3 m/s und 10 m/s liegen kann.

In Schritt M2 erfolgt ein Abkoppeln des Fahrzeugs 50 von dem Zugseil 20. Hierzu wird die Klemmvorrichtung 54 vom Zugseil 20 gelöst, z.B. durch Betätigen des Steuerhebels 54A über ein Schienensystem der Station 10, so dass die Klemmbacken 54D in die offene Stellung bewegt werden. Ferner wird in Schritt M2 die Laufrolle 2 der Klemmvorrichtung 54 an die Führungsschiene 40 gekoppelt, insbesondere derart, dass das Fahrzeug 50 durch die Laufrolle 2 an der Führungsschiene 40 gehalten wird. Zudem wird vorzugsweise die Stützrolle 54C an die Tragschiene 42 gekoppelt.

In Schritt M2 kann die Laufrolle 2 vor dem Abkoppeln des Fahrzeugs 50 optional auf eine Drehzahl beschleunigt werden, bei welcher eine Bahngeschwindigkeit einer Kontaktfläche der Laufrolle 2 im Bereich der Zugseilgeschwindigkeit des Zugseils 20 liegt. Dies kann beispielsweise durch den Antrieb 56 der Klemmvorrichtung 54 erfolgen, indem die elektrische Maschine 3 als Motor betrieben wird.

In Schritt M3 wird das Fahrzeug 50 abgebremst, beispielsweise mithilfe des ersten Pneuförderers 31, wie oben beschrieben und in Fig. 5 schematisch dargestellt, oder mit einer anders gestalteten Antriebs- oder Bremsvorrichtung. Optional wird die elektrische Maschine 3 in Schritt M3 während des Abbremsens als Generator betrieben. Insbesondere wird die Laufrolle 2, das in Kontakt mit der Führungsschien 40 ist, einerseits durch die Trägheit des Fahrzeugs 50 und andererseits zumindest zeitweise dadurch angetrieben, dass das Fahrzeug 50 mittels der Antriebsvorrichtung bewegt wird. Dadurch kann die auf die Laufrolle 2 übertragene Energie über die als Generator betriebene elektrische Maschine 3Energiespeichervorrichtung 58 eingespeist werden. Beim Abbremsen in Schritt M3 wird das Fahrzeug von der Zugseilgeschwindigkeit auf eine erste Schienengeschwindigkeit abgebremst.

Nach dem Abbremsen erfolgt in Schritt M4 ein selbsttätiges Fahren des Fahrzeugs 50 entlang der Führungsschiene 40. Hierbei wird die elektrische Maschine 3 des Antriebs 56 als Motor betrieben. Die zum Betrieb der elektrischen Maschine 3 erforderliche elektrische Energie wird dabei der Energiespeichervorrichtung 58 entnommen. In Schritt M4 wird das Fahrzeug 50 somit selbsttätig fahrend mit einer zweiten Schienengeschwindigkeit entlang der Führungsschiene 40 gefördert. Die zweite Schienengeschwindigkeit kann insbesondere kleiner oder gleich der ersten Schienengeschwindigkeit sein. Beispielsweise kann die zweite Schienengeschwindigkeit kleiner 1 m/s sein und zum Beispiel in einem Bereich zwischen 0,2 m/s und 0,5 m/s liegen.

In einem weiteren Schritt M5 erfolgt ein Bereitstellen eines Paars von gegenläufigen Fahrzeugen 10 in zwei beabstandeten Stationen, danach ein gleichzeitiges oder zeitverzögertes Beschleunigen jedes der zwei Fahrzeuge 50 mittels einer von aussen auf das Fahrzeug 50 einwirkenden Beschleunigungsvorrichtung 32, beispielsweise mit dem zweiten Pneuförderer 32, wie dies oben beschrieben wurde und in Fig. 5 schematisch dargestellt ist. Während des Beschleunigens M5 kann die elektrische Maschine 3, als Generator betrieben und dadurch die elektrische Energiespeichervorrichtung 58 des Fahrzeugs 50 aufgeladen werden. Somit wird beim Beschleunigen dem Fahrzeug 50 über die Beschleunigungsvorrichtung 32 Energie zugeführt. Da die Laufrolle 2 während des Beschleunigens an der Führungsschiene 40 abrollt, nimmt die Laufrolle ebenfalls kinetische Energie von der Beschleunigungsvorrichtung 32 auf, welche über die als Generator betriebene elektrische Maschine 3 in elektrische Energie umgewandelt und in die Energiespeichervorrichtung eingespeist wird. In Schritt M5 kann jedes Fahrzeug 50 insbesondere auf die Zugseilgeschwindigkeit beschleunigt werden.

In einem weiteren Schritt M6 erfolgt ein Ankoppeln des jeweiligen Fahrzeugs 50 an das auslaufende Zugseil 20, wobei die Klemmvorrichtung 54 wieder mit dem Zugseil 20 verbunden wird. Beispielsweise kann der Steuerhebels 54A über ein Schienensystem der Station 10 betätigt werden, so dass die Klemmbacken 54D von der offenen Stellung in die Klemmstellung bewegt werden.

Ein Vorteil dieses Verfahrens liegt darin, dass das Fahrzeug 50 durch den Antrieb 56 zumindest abschnittsweise selbsttätig entlang der Führungsschiene 40 bewegt werden kann, wobei die hierfür erforderliche elektrische Energie der vom Fahrzeug 50 mitgeführten Energiespeichervorrichtung 58 entnommen wird. Dadurch kann entlang der Führungsschiene 40 in einem Bereich zwischen der optionalen Antriebsvorrichtung 31 und der Beschleunigungsvorrichtung 32 ganz oder teilweise auf aufwendige externe Fördereinrichtungen verzichtet werden kann. Ferner ist eine externe Stromversorgung des Fahrzeugs 50 während des selbsttägigen Fahrens nicht zwangsläufig erforderlich, da der Abbremsvorgang bzw. ein Fördervorgang durch die optionale Antriebsvorrichtung 31 und/oder ein Beschleunigungsvorgang durch die Beschleunigungseinrichtung 32 dazu genutzt werden, über die Laufrolle 2 der elektrischen Maschine 3 des Antriebs 56 kinetische Energie zuzuführen, welche durch die elektrische Maschine 3 in elektrische Energie umgewandelt und in die Energiespeichervorrichtung 58 eingespeist wird. Zudem werden mit diesem Verfahren jeweils die Bewegung eines Paars gegenläufiger Fahrzeuge synchronisiert.

Die Energiespeichervorrichtung 58 weist vorzugsweise eine derart hohe Speicherkapazität auf, dass das Fahrzeug 50 vorzugsweise eine Stunde oder eine halbe Stunde lang selbstfahrend entlang von Führungsschienen 40 fahren kann. Eine derart dimensionierte Speicherkapazität weist den Vorteil auf, dass sich das Fahrzeug 50 während einer gewissen Zeit auch dann noch zuverlässig selbstfahrend entlang von Führungsschienen 40 fahren kann, wenn die elektrische Maschine 3 nicht mehr oder zeitweise nicht mehr generatorisch betreibbar ist. Ein solcher Fall kann sich beispielsweise ergeben wenn eine Führungsschiene 40 im Bereich der Beschleunigungsvorrichtung vereist oder verschmutzt ist, sodass die Laufrolle 2 nicht mehr sauber auf der Führungsschiene 40 abrollt, und die elektrische Maschine 3 bei dieser Beschleunigungsvorrichtung nur noch teilweise oder gar nicht mehr generatorisch betreibbar ist.

Der Antrieb 56 bzw. das Fahrzeug 50 ist vorzugsweise auch derart ausgestaltet, dass nicht nur horizontal verlaufende Führungsschienen 40, sondern auch solche mit gewissen Steigungen von weniger als 5% oder weniger als 10% selbstfahrend befahrbar sind, sodass das Fahrzeug 50 auch Rampen selbstfahrend überwinden kann. Die Laufrolle 2 weist vorzugsweise einen Durchmesser im Bereich zwischen 100 mm und 200 mm auf, und besonders bevorzugt einen Durchmesser im Bereich zwischen 150 mm und 200 mm auf, insbesondere um den Rollwiderstand gering zu halten.

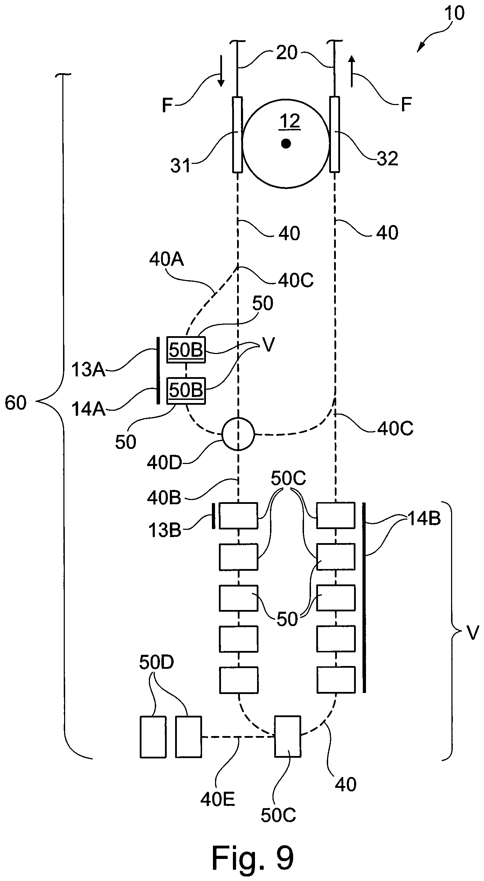

Fig. 9 zeigt eine schematische Ansicht einer Station 10 einer Umlaufbahn 60. Das Zugseil 20 wird an der Zugseilumlenkrolle 12 um 180° umgelenkt. Ankommende Fahrbetriebsmittel 50 werden mit Hilfe der Verzögerungsvorrichtung 31 der Führungsschiene 40 übergeben, entlang welcher sich die Fahrbetriebsmittel 50 selbstfahrend bewegen. Prioritäre Fahrbetriebsmittel 50B, das heisst Fahrbetriebsmittel mit höherer Priorität, beispielsweise Fahrbetriebsmittel erster Klasse, werden über eine Weiche 40C einem kürzeren Führungsschienenast 40A und nachfolgend einem prioritären Aus- und Einstieg 13A, 14A zugeführt. Über eine Kreuzung 40D, eine Weiche 40C und die Führungsschiene 40 können diese Fahrbetriebsmittel 50B der Beschleunigungsvorrichtung 32 zugeführt werden, und anschliessend an das Zugseil 20 gekoppelt werden. Sekundäre Fahrbetriebsmittel 50C, das heisst Fahrbetriebsmittel mit tieferer Priorität, beispielsweise Fahrbetriebsmittel zweiter Klasse, werden im dargestellten Ausführungsbeispiel nach der Verzögerungsvorrichtung 31 geradlinig zum sekundären Ausstieg 13B gefördert, und anschliessend unter Ausbildung eines U-förmigen Speichers einem sekundären Einstieg 14B zugeführt, von wo aus die Fahrbetriebsmittel 50C über die Führungsschiene 40 und die Beschleunigungsvorrichtung 32 dem Zugseil 20 zuführbar sind. Die Station 10 kann beispielsweise zusätzlich noch eine über mehrere Führungsschienen, beispielsweise ausgestaltet als Abstellschiene 40E, umfassen, auf welchen zusätzliche Fahrbetriebsmittel 50, beispielsweise Ersatzfahrbetriebsmittel oder Spezialfahrbetriebsmittel gespeichert sind. Im dargestellten Ausführungsbeispiel ist in der Station 10 ein Vorrat V von insgesamt fünfzehn Fahrbetriebsmitteln 50 gespeichert. Eine übergeordnete Steuerung 101 der Umlaufbahn 60 führt die Fahrbetriebsmittel 50 jeweils derart der Beschleunigungsvorrichtung 32 zu, dass jeweils ein Paar gegenläufig mit dem Zugseil 20 zu verbindenden Fahrbetriebsmittel derart angekoppelt werden, dass die anschliessend am Zugseil 20 befestigten Fahrbetriebsmittel 50 symmetrisch bezüglich dem Symmetriepunkt S₁ angeordnet sind. Vorzugsweise steht in beiden Stationen 10 der Umlaufbahn 60 jeweils ein mit Fahrgästen beladenes Fahrbetriebsmittel 50 zur Abfahrt bereit, sodass diese beiden Fahrbetriebsmittel 50 paarweise dem Zugseil 20 zuführbar sind. Falls sich nur in einem Fahrbetriebsmittel 50 Fahrgäste befinden, so kann in der Gegenstation beispielsweise ein leeres Fahrbetriebsmittel 50B, 50C verwendet werden, das als Gegenpaar verwendet wird und dem Zugseil 20 paarweise mit dem Fahrgäste enthaltenden Fahrbetriebsmittel 50 dem Zugseil zugeführt wird. Mit diesem Verfahren können mit Fahrgästen beladene Fahrbetriebsmittel 50 vorzugsweise ohne Wartezeit oder nach nur kurzer Wartezeit abfahren.

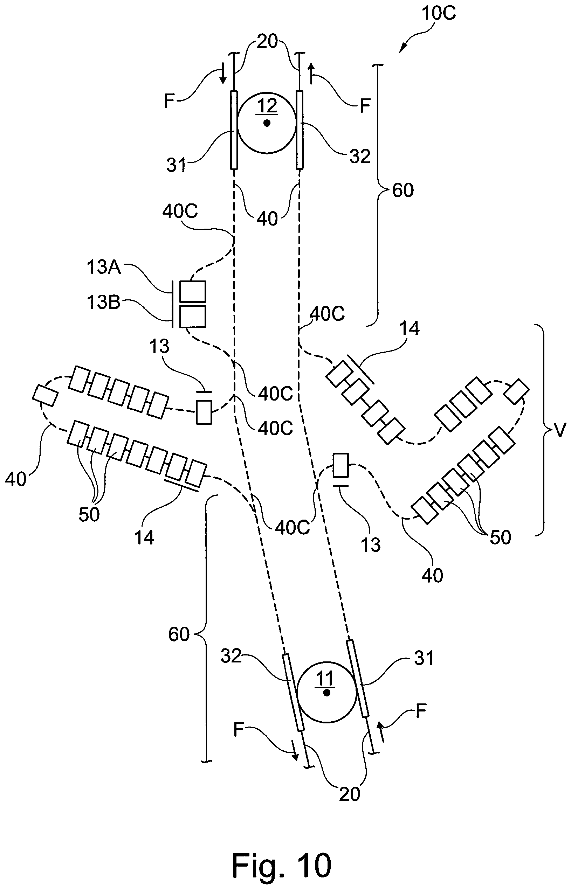

Fig. 10 zeigt eine schematische Ansicht einer Übergangsstation 10C von zwei sich treffenden Umlaufbahnen 60. Die beiden Umlaufbahnen 60 sind vorzugsweise mit einer diese direkt verbindenden, im dargestellten Ausführungsbeispiel geradlinig verlaufenden Führungsschiene 40 verbunden, über welche zwischen den zwei Umlaufbahnen 60 Fahrbetriebsmittel 40 ausgetauscht werden können, ohne dass innerhalb der Übergangsstation 10C ein Ausstieg 13 oder ein Einstieg 14 angefahren wird. Die dargestellte Übergangsstation 10C umfasst jedoch auch Weichen 40C, über welche den Aus- und Einstiegen 13, 14 Fahrbetriebsmittel 40 zuführbar sind. In einer weiteren Ausführungsform könnte auch auf die durchgehende, geradlinig verlaufende Führungsschiene 40 verzichtet werden, sodass all in die Übergangsstation 10C einfahrenden Fahrbetriebsmittel 40 den Aus- und Einstiegen 13, 14 zugeführt werden.

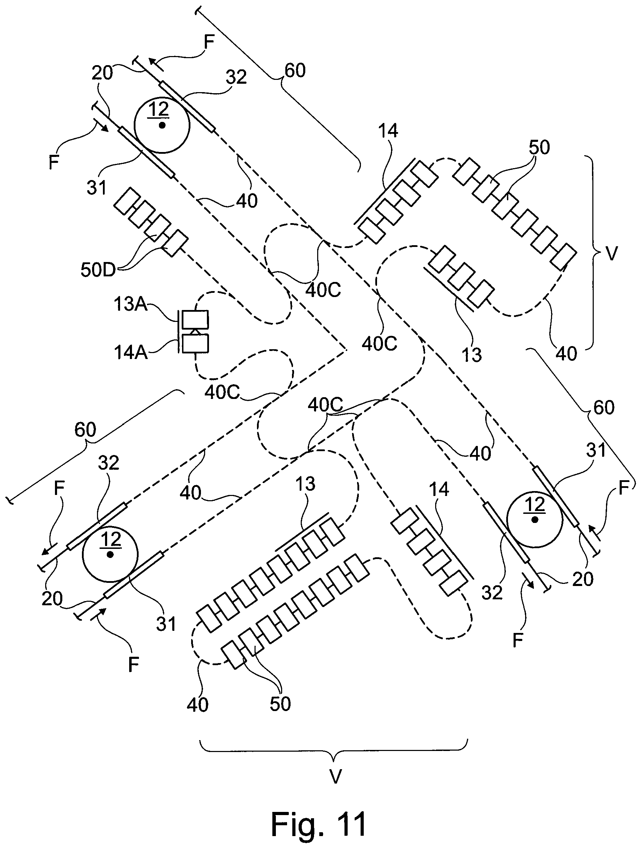

Fig. 11 zeigt eine schematische Ansicht einer Übergangsstation 10C von drei sich treffenden Umlaufbahnen 60. Diese drei Umlaufbahnen 60 sind vorzugsweise mit jeweils einer diese direkt verbindenden, im dargestellten Ausführungsbeispiel weitgehend geradlinig verlaufenden Führungsschienen 40 verbunden, über welche zwischen den drei Umlaufbahnen 60 Fahrbetriebsmittel 40 ausgetauscht werden können, ohne dass innerhalb der Übergangsstation 10C ein Ausstieg 13 oder ein Einstieg 14 angefahren wird. Die dargestellte Übergangsstation 10C umfasst zudem auch Weichen 40C, über welche den Aus- und Einstiegen 13, 14 Fahrbetriebsmittel 40 zuführbar sind. In einer weiteren Ausführungsform könnte auch auf die durchgehende, weitgehend geradlinig verlaufenden Führungsschienen 40 verzichtet werden, sodass alle in die Übergangsstation 10C einfahrenden Fahrbetriebsmittel 40 den Aus- und Einstiegen 13, 14 zugeführt werden. Da sich die Fahrbetriebsmittel 40 entlang der Führungsschienen 40 sowie entlang der Weichen 40C usw. selbstfahrend und elektromotorisch angetrieben bewegen, können die Fahrbetriebsmittel 40 in einer Vielzahl von Möglichkeiten innerhalb der Übergangsstation 10C und zwischen den Umlaufbahnen 60 bewegt werden, um insbesondere eine Vielzahl individueller Fahrwünsche von Fahrgästen zu erfüllen. Das erfindungsgemässe Betriebsverfahren gelangt besonders vorteilhaft in komplexen Verkehrssituationen wie beispielsweise in Fig. 11 dargestellt zum Einsatz, da das Betriebsverfahren vorzugsweise ein schneller Durchfahren der Übergangstation 10C, ohne oder mit nur geringen Wartezeiten, ermöglicht, zudem vorzugsweise ein schnelles Abfahren eines mit Fahrgästen beladenen Fahrbetriebsmittel ermöglicht, und zudem vorzugsweise auswahlweise Fahrten in eine Mehrzahl von Richtungen ermöglicht, und zudem vorzugsweise eine Priorisierung von Fahrten ermöglicht, und zudem vorzugsweise den Einsatz von unterschiedlichen, z.B. themenspezifischen Fahrbetriebsmitteln ermöglicht. Insbesondere können die Fahrbetriebsmittel 40 ähnlich wie Taxis betrieben werden, indem einem individuellen Fahrbetriebsmittel 40 ein Ziel vorgegeben wird, und dieses, vorzugsweise über eine Mehrzahl von Übergansstationen 10C, angefahren wird, ohne dazwischen an irgendwelchen Aus- und Einstiegen 13,14 anzuhalten.

## Patentansprüche

1. Verfahren zum Betrieb einer Seilbahnanlage (100) umfassend eine Mehrzahl von Fahrbetriebsmitteln (50) sowie umfassend eine Mehrzahl von beabstandeten Stationen (10, 10A, 10B), wobei jeweils zwei beabstandete Stationen (10, 10A, 10B) über ein gemeinsames Zugseil (20) miteinander verbunden sind und eine Umlaufbahn (60) bilden, wobei die Fahrbetriebsmittel (50) innerhalb der Station (10) selbstfahrend und motorisch angetrieben entlang einer Führungsschiene (40) bewegt werden, wobei die Fahrbetriebsmittel (50) beim Ausfahren aus der Station (10) an das Zugseil (20) gekoppelt werden, und wobei die Fahrbetriebsmittel (50) beim Einfahren in die Station (10) vom Zugseil (20) gelöst werden und der Führungsschiene (40) zugeleitet werden, wobei die Umlaufbahn (60) einen Mittelpunkt (S) aufweist, der in Verlaufsrichtung des Zugseils (20) mittig zwischen den beabstandeten Stationen (10) der Umlaufbahn (60) angeordnet ist, dass in beiden beabstandeten Stationen (10) der Umlaufbahn (60) ein Vorrat (V) an Fahrbetriebsmitteln (50) gespeichert wird, **dadurch gekennzeichnet, dass** die Fahrbetriebsmittel (50) derart von den beiden beabstandeten Stationen (10) der Umlaufbahn (60) dem Zugseil (20) zugeführt und an dieses gekoppelt werden, dass jeweils zwei an das Zugseil (20) gekoppelte, sich in entgegengesetzter Richtung bewegende Fahrbetriebsmittel (50) symmetrisch bezüglich einem in Verlaufsrichtung des Zugseils (20) um bis zu + / - 50 Meter vom Mittelpunkt (S) beabstandeten Symmetriepunkt (S₃) angeordnet werden, wobei jedes Fahrbetriebsmittel (50) eine Energiespeichervorrichtung (58), einen Motor (3C), eine Steuerungsvorrichtung (59) sowie einen Generator (3D) umfasst, dass die Fahrbetriebsmittel (50) während dem Ausfahren aus der Station (10) von einer in der Station (10) angeordneten Beschleunigungseinrichtung (32) angetrieben werden, sodass der Generator (3D) während dem Ausfahren aus der Station (10) angetrieben wird, und der Energiespeicher (58) mit der vom Generator (3D) erzeugten Energie aufgeladen wird.

2. Verfahren nach Anspruch 1, **dadurch gekennzeichnet, dass** die Fahrbetriebsmittel (50) während dem Einfahren in die Station (10) vom Generator (3D) zumindest teilweise abgebremst werden, und/oder dass die Fahrbetriebsmittel (50) während dem Einfahren in die Station (10) von einer in der Station (10) angeordneten Verzögerungsvorrichtung (31) angetrieben/oder abgebremst werden, sodass der Generator (3D) während dem Einfahren in die Station (10) angetrieben wird und die Energiespeichervorrichtung (58) mit der vom Generator (3D) erzeugten Energie aufgeladen wird.

3. Verfahren nach einem der vorhergehenden Ansprüche, **dadurch gekennzeichnet, dass** die Seilbahnanlage (100) eine Mehrzahl von Umlaufbahnen (60) umfasst, dass zumindest zwei Umlaufbahnen (60) in eine gemeinsame Übergangsstation (10C) münden, und dass über die gemeinsame Übergangsstation (10C) Fahrbetriebsmittel zwischen den Umlaufbahnen (60) ausgetauscht werden.

4. Verfahren nach Anspruch 3, **dadurch gekennzeichnet, dass** zumindest drei Umlaufbahnen (60) in eine gemeinsame Übergangsstation (10C) münden.

5. Verfahren nach einem der vorhergehenden Ansprüche, **dadurch gekennzeichnet, dass** in den zwei beabstandeten Stationen (10) einer Umlaufbahn (60) jeweils dieselbe vorbestimmte Anzahl Fahrbetriebsmittel (50) gespeichert, wobei die vorbestimmte Anzahl insbesondere von der Länge der Umlaufbahn (60) abhängig ist.

6. Verfahren nach Anspruch 5, **dadurch gekennzeichnet, dass** zumindest zwei Umlaufbahnen (60) in eine gemeinsame Übergangsstation (10C) münden, und dass in der gemeinsamen Übergangsstation (10C) gespeicherte Fahrbetriebsmittel (50) zwischen den zumindest zwei Umlaufbahnen (60) ausgetauscht werden.

7. Verfahren nach einem der vorhergehenden Ansprüche, **dadurch gekennzeichnet, dass** die Anzahl Fahrbetriebsmittel (50), welche in jeder von zwei beabstandeten Stationen (10) einer Umlaufbahn (60) gespeichert sind, verändert wird, indem die Fahrbetriebsmittel (50) derart dem Zugseil (20) zugeführt werden, dass der Abstand zwischen Mittelpunkt (S) und Symmetriepunkt (S1) in der einen Förderrichtung erhöht wird, und/oder dass der Abstand zwischen Mittelpunkt (S) und Symmetriepunkt (S1) in der entgegengesetzten Förderrichtung reduziert wird.

8. Verfahren nach einem der vorhergehenden Ansprüche, **dadurch gekennzeichnet, dass** in einer der zwei beabstandeten Stationen (10) einer Umlaufbahn (60) ein Fahrbetriebsmittel (50) mit Fahrgästen gefüllt wird, und dass dieses Fahrbetriebsmittel (50) dann abfährt, wenn in der anderen der zwei beabstandeten Stationen (10) der Umlaufbahn (60) ebenfalls ein Fahrbetriebsmittel (50) zur Abfahrt bereit ist.

9. Verfahren nach Anspruch 8, **dadurch gekennzeichnet, dass** das in der anderen der zwei beabstandeten Stationen (10) der Umlaufbahn (60) zur Abfahrt bereitstehende Fahrbetriebsmittel (50) keine Fahrgeäste aufweist.

10. Verfahren nach einem der Ansprüche 7 oder 9, **dadurch gekennzeichnet, dass** die Fahrbetriebsmittel (50) zumindest zwei unterschiedliche Prioritätsstufen annehmen können, eine Normalfahrt und eine Expressfahrt, und dass die Fahrbetriebsmittel (50) mit der Prioritätsstufe Expressfahrt mit höherer Priorität dem Zugseil (20) zugeleitet werden.

11. Verfahren nach Anspruch 10, **dadurch gekennzeichnet, dass** die Führungsschiene (40) in der Station (10) verzweigt in zumindest einen kürzeren Führungsschienenast (40A) und einen längeren Führungsschienenast (40B), und dass Fahrbetriebsmittel (50) mit der Prioritätsstufe Expressfahrt dem kürzeren Führungsschienenast (40A) zugeführt werden.

12. Verfahren nach einem der vorhergehenden Ansprüche, **dadurch gekennzeichnet, dass** mehrere Fahrbetriebsmittel (50) eine Fahrbetriebsmittelgruppe (50A) bilden und mit einem gegenseitigen Abstand von weniger als 10 Metern an das Zugseil (20) gekuppelt werden, und dass in der entgegengesetzten Richtung dieselbe Anzahl Fahrbetriebsmittel (50) als eine Fahrbetriebsmittelgruppe (50A) an das Zugseil (20) gekuppelt werden.

13. Verfahren nach einem der vorhergehenden Ansprüche, **dadurch gekennzeichnet, dass** bei einer Umlaufbahn (60), bei welcher keine Fahrbetriebsmittel (50) unterwegs sind, die Geschwindigkeit des Zugseils (20) reduziert wird.

14. Seilbahnanlage (100) betrieben mit einem Verfahren nach einem der vorhergehenden Ansprüche.

## Claims

1. Method for operating a cableway system (100) comprising a plurality of transporting means (50) and comprising a plurality of spaced stations (10, 10A, 10B), wherein two spaced stations (10, 10A, 10B) are connected to each other via a common haul rope (20) and form a circular path (60), wherein the transporting means (50) are moved along a guide rail (40) within the station (10) in a self-propelled and motor-driven manner, wherein the transporting means (50) are coupled to the haul rope (20) when leaving the station (10), and wherein the transporting means (50) are released from the haul rope (20) when entering the station (10) and are guided to the guide rail (40), the circular path (60) having a center point (S) which is arranged centrally between the spaced stations (10) of the circular path (60) in the direction of travel of the haul rope (20), in that a stock (V) of transporting means (50) is stored in both spaced stations (10) of the circular path (60), **characterized in that** the transporting means (50) are fed from the two spaced stations (10) of the circular path (60) to the haul rope (20) and coupled to the latter in such a way that in each case two transporting means (50) coupled to the haul rope (20) and moving in opposite directions are arranged symmetrically with respect to a symmetry point (S3) spaced from the center point (S) by up to +/- 50 meters in the direction of travel of the haul rope (20), wherein each transporting means (50) comprises an energy storage unit (58), a motor (3C), a control unit (59) and a generator (3D), **in that** the transporting means (50) are driven by an acceleration system (32) arranged in the station (10) during the extension from the station (10), so that the generator (3D) is driven during the extension from the station (10), and the energy storage unit (58) is charged with the energy generated by the generator (3D).

2. Method according to claim 1, **characterized in that** the transporting means (50) are at least partially decelerated by the generator (3D) during entry into the station (10), and/or **in that** the transporting means (50) are driven/or decelerated by a deceleration system (31) arranged in the station (10) during entry into the station (10), so that the generator (3D) is driven during entry into the station (10) and the energy storage unit (58) is charged with the energy generated by the generator (3D).

3. Method according to one of the preceding claims, **characterized in that** the cableway system (100) comprises a plurality of circular paths (60), **in that** at least two circular paths (60) open into a common transition station (10C), and **in that** transporting means are exchanged between the circular paths (60) via the common transition station (10C).

4. Method according to claim 3, **characterized in that** at least three circular paths (60) lead into a common transition station (10C).

5. Method according to one of the preceding claims, **characterized in that** the same predetermined number of transporting means (50) is stored in each of the two spaced-apart stations (10) of a circular path (60), the predetermined number being dependent in particular on the length of the circular path (60).

6. Method according to claim 5, **characterized in that** at least two circular paths (60) open into a common transition station (10C), and **in that** transporting means (50) stored in the common transition station (10C) are exchanged between the at least two circular paths (60).

7. Method according to one of the preceding claims, **characterized in that** the number of transporting means (50) stored in each of two spaced stations (10) of a circular path (60) is changed by feeding the transporting means (50) to the haul rope (20) in such a way that the distance between the center point (S) and the symmetry point (S1) is increased in one conveying direction, and/or that the distance between the center point (S) and the symmetry point (S1) is reduced in the opposite conveying direction.

8. Method according to one of the preceding claims, **characterized in that** a transporting means (50) is filled with passengers in one of the two spaced-apart stations (10) of a circular path (60), and **in that** this transporting means (50) departs when a transporting means (50) is also ready for departure in the other of the two spaced-apart stations (10) of the circular path (60).

9. Method according to claim 8, **characterized in that** the transporting means (50) ready for departure in the other of the two spaced stations (10) of the circular path (60) has no passengers.

10. Method according to one of claims 7 or 9, **characterized in that** the transporting means (50) can have at least two different priority levels, a normal run and an express run, and **in that** the transporting means (50) with the express run priority level are fed to the haul rope (20) with higher priority.

11. Method according to claim 10, **characterized in that** the guide rail (40) branches in the station (10) into at least one shorter guide rail branch (40A) and one longer guide rail branch (40B), and **in that** transporting means (50) with the express run priority level are fed to the shorter guide rail branch (40A).

12. Method according to one of the preceding claims, **characterized in that** a plurality of transporting means (50) form a transporting means group (50A) and are coupled to the haul rope (20) at a mutual distance of less than 10 metres, and **in that** the same number of transporting means (50) are coupled to the haul rope (20) in the opposite direction as a transporting means group (50A).

13. Method according to one of the preceding claims, **characterized in that** the speed of the haul rope (20) is reduced on a circular path (60) in which no transporting means (50) are in motion.

14. Cableway system (100) operated by a method according to any one of the preceding claims.

## Revendications

1. Procédé d'exploitation d'un système de téléphérique (100) comprenant plusieurs moyens locomoteur (50) et comprenant plusieurs stations espacées (10, 10A, 10B), dans lequel deux stations espacées (10, 10A, 10B) sont reliées l'une à l'autre par un câble tracteur (20) commun et forme une trajectoire circulaire (60), dans lequel les moyens locomoteurs (50) sont déplacés le long d'un rail de guidage (40) à l'intérieur de la station (10) de manière autopropulsée et motorisée, dans lequel les moyens locomoteurs (50) sont couplés au câble tracteur (20) lorsqu'ils quittent la station (10), et dans laquelle les moyens locomoteur (50) sont libérés du câble tracteur (20) lorsqu'ils entrent dans la station (10) et sont guidés vers le rail de guidage (40), la trajectoire circulaire (60) ayant un point central (S) qui est disposé au centre entre les stations espacées (10) de la trajectoire circulaire (60) dans la direction de déplacement du câble tracteur (20), en ce qu'un stock (V) de moyens locomoteur (50) est stocké dans chacun des deux stations espacées (10) de la trajectoire circulaire (60), **caractérisé en ce que** les moyens locomoteurs (50) sont acheminés des deux stations espacées (10) de la trajectoire circulaire (60) au câble tracteur (20) et couplés à ce dernier de telle sorte que dans chaque cas, deux moyens locomoteurs (50) couplés au câble tracteur (20) et se déplaçant dans des directions opposées sont disposés symétriquement par rapport à un point de symétrie (S3) espacé du point central (S) d'un maximum de + / - 50 mètres dans la direction de déplacement du câble tracteur (20), dans lequel chaque moyen locomoteur (50) comprend une unité de stockage d'énergie (58), un moteur (3C), une unité de contrôle (59) et un générateur (3D), **en ce que** les moyens locomoteur (50) sont entraînés par un système d'accélération (32) disposé dans la station (10) pendant l'extension à partir de la station (10), de sorte que le générateur (3D) est entraîné pendant l'extension à partir de la station (10), et que l'unité de stockage d'énergie (58) est chargée avec l'énergie générée par le générateur (3D).

2. Procédé selon la revendication 1, **caractérisé en ce que** les moyens locomoteurs (50) sont au moins partiellement décélérés par le générateur (3D) lors de l'entrée dans la station (10), et/ou **en ce que** les moyens locomoteurs (50) sont entraînés et/ou décélérés par un système de décélération (31) agencé dans la station (10) lors de l'entrée dans la station (10), de sorte que le générateur (3D) est entraîné lors de l'entrée dans la station (10) et que l'unité de stockage d'énergie (58) est chargée avec l'énergie générée par le générateur (3D).

3. Procédé selon l'une des revendications précédentes, **caractérisé en ce que** le système téléphérique (100) comprend plusieurs trajectoires circulaires (60), **en ce qu'**au moins deux trajectoires circulaires (60) débouchent dans une station de transition commune (10C), et **en ce que** des moyens locomoteurs sont échangés entre les trajectoires circulaires (60) via la station de transition commune (10C).

4. Procédé selon la revendication 3, **caractérisé en ce qu'**au moins trois trajectoires circulaires (60) débouchent sur une station de transition commune (10C).

5. Procédé selon l'une des revendications précédentes, **caractérisé en ce qu'**un même nombre prédéterminé de moyens locomoteurs (50) est stocké dans chacune des deux stations (10) espacées d'une trajectoire circulaire (60), le nombre prédéterminé dépendant notamment de la longueur de la trajectoire circulaire (60).

6. Procédé selon la revendication 5, **caractérisé en ce qu'**au moins deux trajectoires circulaires (60) débouchent dans une station de transition commune (10C), et **en ce que** des moyens locomoteur (50) stockés dans la station de transition commune (10C) sont échangés entre les au moins deux trajectoires circulaires (60).

7. Procédé selon l'une des revendications précédentes, caractérisé en ce le nombre de moyens locomoteurs (50) stockés dans chacune des deux stations espacées (10) d'une trajectoire circulaire (60) est modifié en amenant les moyens locomoteurs (50) au câble tracteurs (20) de manière à augmenter la distance entre le point central (S) et le point de symétrie (S1) dans un sens de convoyage, et/ou de manière à réduire la distance entre le point central (S) et le point de symétrie (S1) dans le sens de convoyage opposé.

8. Procédé selon l'une des revendications précédentes, **caractérisé en ce qu'**un moyen locomoteur (50) est rempli de passagers dans l'une des deux stations espacées (10) d'une trajectoire circulaire (60), et **en ce que** ce moyen locomoteur (50) part lorsqu'un moyen locomoteur (50) est également prêt à partir dans l'autre des deux stations espacées (10) de la trajectoire circulaire (60).

9. Procédé selon la revendication 8, **caractérisé en ce que** le moyen locomoteur (50) prêt au départ dans l'autre des deux stations espacées (10) de la trajectoire circulaire (60) ne comporte aucun passager.

10. Procédé selon l'une des revendications 7 ou 9, **caractérisé en ce que** les moyens locomoteurs (50) peuvent avoir au moins deux niveaux de priorité différents, un transport normal et un transport express, et **en ce que** les moyens locomoteurs (50) ayant le niveau de priorité du transport express sont acheminés vers le câble tracteur (20) avec une priorité plus élevée.

11. Procédé selon la revendication 10, **caractérisé en ce que** le rail de guidage (40) se divise dans la station (10) en au moins une branche de rail de guidage plus courte (40A) et une branche de rail de guidage plus longue (40B), et **en ce que** les moyens locomoteur (50) avec le niveau de priorité de transport express sont acheminés vers la branche de rail de guidage la plus courte.

12. Procédé selon l'une des revendications précédentes, **caractérisé en ce qu'**une pluralité de moyens locomoteurs (50) forme un groupe de moyens locomoteurs (50A) et sont accouplés au câble tracteur (20) à une distance mutuelle inférieure à 10 mètres, et **en ce qu'**un même nombre de moyens locomoteurs (50) sont couplés au câble tracteur (20) dans la direction opposée en tant que groupe de moyens locomoteurs (50A).

13. Procédé selon l'une des revendications précédentes, **caractérisé en ce que** la vitesse du câble tracteur (20) est réduite sur une trajectoire circulaire (60) dans laquelle aucun moyen locomoteur (50) n'est en mouvement.

14. Système téléphérique (100) exploité par un procédé selon l'une quelconque des revendications précédentes.
